(19) Europäisches Patentamt
European Patent Office
Office européen des brevets

(11) **EP 2 966 424 B1**

(12) # EUROPÄISCHE PATENTSCHRIFT

(45) Veröffentlichungstag und Bekanntmachung des Hinweises auf die Patenterteilung:
**22.01.2020   Patentblatt 2020/04**

(51) Int Cl.:
***G01G 19/00*** *(2006.01)*   ***G01G 21/23*** *(2006.01)*
***G01G 23/06*** *(2006.01)*

(21) Anmeldenummer: **15171810.3**

(22) Anmeldetag: **12.06.2015**

(54) **WIEGEVERFAHREN, ANORDNUNG ZUR DURCHFÜHRUNG DES WIEGEVERFAHRENS SOWIE EIN ENTSPRECHENDES COMPUTERPROGRAMM UND EIN ENTSPRECHENDES COMPUTERLESBARES SPEICHERMEDIUM**

WEIGHING METHOD, ASSEMBLY FOR REALISING THE WEIGHING METHOD AND A CORRESPONDING COMPUTER PROGRAM AND A CORRESPONDING COMPUTER READABLE STORAGE MEDIUM

PROCÉDÉ DE PESAGE, SYSTÈME DE RÉALISATION DU PROCÉDÉ DE PESAGE ET PROGRAMME INFORMATIQUE CORRESPONDANT ET SUPPORT DE STOCKAGE CORRESPONDANT LISIBLE SUR ORDINATEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.06.2014   DE 102014211515**

(43) Veröffentlichungstag der Anmeldung:
**13.01.2016   Patentblatt 2016/02**

(73) Patentinhaber: **Francotyp-Postalia GmbH**
**13089 Berlin (DE)**

(72) Erfinder:
- **Kieser, Axel**
  **14195 Berlin (DE)**
- **Baum, Volker**
  **13189 Berlin (DE)**
- **Blume, Andreas**
  **16515 Berlin (DE)**
- **Von der Waydbrink, Karsten**
  **14482 Berlin (DE)**

(74) Vertreter: **Gulde & Partner**
**Patent- und Rechtsanwaltskanzlei mbB**
**Wallstraße 58/59**
**10179 Berlin (DE)**

(56) Entgegenhaltungen:
**EP-A1- 2 520 911      EP-B1- 1 014 052**
**GB-A- 2 287 541       US-A- 4 553 619**
**US-A1- 2009 301 791   US-A1- 2009 301 791**

**Beschreibung**

Die Erfindung betrifft ein Wiegeverfahren, eine Anordnung zur Durchführung des Wiegeverfahrens sowie ein entsprechendes Computerprogramm und ein entsprechendes computerlesbares Speichermedium, welche einsetzbar sind insbesondere im Bereich des dynamischen Wiegens bei der Postverarbeitung. Ein besonderer Einsatzbereich ist die Gewichtsbestimmung von Poststücken mithilfe einer dynamischen Waage.

**1. Stand der Technik**

Im Bereich des dynamischen Wiegens bei der Postverarbeitung sind verschiedene Lösungen bekannt. Insbesondere kommen horizontale Systeme oder vertikale Systeme (108°) zum Einsatz.

Kundenanforderungen werden insbesondere an den Durchsatz dieser Systeme gestellt. Der Durchsatz D einer Frankiermaschine bestimmt sich zu Anzahl der Briefe pro Zeiteinheit. Mit einer gegebenen Transportgeschwindigkeit v und einem Briefabstand x (edge-to-edge, also Briefvorderkante zu Briefvorderkante) ergibt sich $D = v / x$. D.h., um den Durchsatz zu erhöhen, muss also die Transportgeschwindigkeit der Briefe erhöht und/oder der Abstand zwischen den Briefen verringert werden.

Ein Kriterium für den Durchsatz ist die Wiegegeschwindigkeit. In der Patentschrift EP 1 014 052 B8 ist beispielsweise ein Algorithmus zur Ermittlung des Wiegeergebnisses beschrieben. Andere Lösungsansätze zur Durchsatzerhöhung durch Verkürzung des Abstands zwischen den Briefen sind aus der Veröffentlichung US 2009/0008859 A1 bekannt. Dort ist ein System beschrieben, bei dem mindestens zwei kürzere Wiegebalken hintereinander geschaltet sind. Kurze Briefe können in kurzem Abstand mittels eines Wiegebalkens gewogen werden, bei langen Briefen ist das Wiegeergebnis eine Superposition der Wiegeergebnisse beider Wiegebalken.

Eine weitere Lösung ist die in der Veröffentlichung US 2009/0139777 A1 beschriebene parallele Anordnung zweier Wiegebalken, so dass der Durchsatz durch Parallelisierung des Wiegevorgangs gesteigert werden kann. Hierfür sind jedoch zusätzliche Vorrichtungen zum Teilen und Zusammenführen des Briefstroms vor und hinter der Waage notwendig, was den Platzbedarf in die Höhe treibt.

Weiterhin wurde unter DE 10 2010 009 431 A1 eine Lösung offengelegt, die eine verkürzte Waage mit einer Abzugsvorrichtung beschreibt.

Eine Waage mit kaskadierten Wiegezellen ist aus der Veröffentlichung DE 10 2011 100 176 A1 bekannt.

In Untersuchungen hat sich gezeigt, dass der in EP 1 014 052 B8 beschriebene Algorithmus für eine Waage mit kaskadierten Wiegezellen nicht genügend robust ist.

In der GB 2 287 541 A wird eine dynamische Wiegeeinrichtung beschrieben, die eingerichtet ist, ein Wiegesignal entsprechend dem Gewicht eines Objekts auszugeben, während dieses Objekt mittels einer Transporteinrichtung transportiert wird. Es wird ein Verfahren vorgeschlagen, wie ein optimaler Zeitpunkt zum Erfassen der Gewichtsinformation des Objekts bestimmt werden kann. Dazu werden vorab zu verschiedenen Zeitpunkten Gewichtsinformationen zu einem Referenzobjekt mehrfach erfasst und gruppiert und anschließend wird ein Messzeitpunkt bestimmt auf der Basis einer Gruppe dieser Gewichtsinformationen, welche eine minimale Streuung aufweist.

In der US 4,553,619 wird eine elektronische Waage beschrieben. Diese ist eingerichtet, einen Gewichtswert eines gewogenen Objekts auf der Basis eines Mittelwertes erfasster Gewichtsinformationen anzuzeigen. Die Waage ist weiterhin eingerichtet zu bestimmen und anzuzeigen, ob das angezeigte Objektgewicht auf Basis stabilisierter Gewichtsinformationen berechnet worden ist, oder ob noch - oder wieder - Fluktuationen mit Bezug auf erfasste Gewichtsinformationen vorliegen.

Es ist daher Aufgabe der vorliegenden Erfindung, ein Wiegeverfahren, eine Anordnung zur Durchführung des Wiegeverfahrens sowie ein entsprechendes Computerprogramm und ein entsprechendes computerlesbares Speichermedium bereitzustellen, welche den genannten Nachteil beheben und insbesondere einen Wiegealgorithmus bereitstellen, der unter Ausnutzung des Prinzips kaskadierter Wiegezellen eine verbesserte Wiegegenauigkeit erreicht.

Diese Aufgabe wird erfindungsgemäß durch die Merkmale in den Ansprüchen 1, und 10 bis 12 gelöst. Zweckmäßige Ausgestaltungen der Erfindung sind in den Unteransprüchen enthalten.

Ein weiterer besonderer Vorteil der vorliegenden Erfindung besteht darin, dass der Durchsatz einer Frankiermaschine erhöht wird. Dies wird dadurch erreicht, dass bei dem erfindungsgemäßen Verfahren mindestens eine Wiegeeinheit bereitgestellt wird, wobei die Wiegeeinheit eine Wägezelle und eine Wägeschale umfasst. Bei der Wiegeeinheit kann es sich beispielsweise um eine Waage handeln, die mit einer Frankiermaschine kombiniert oder die Teil einer Frankiermaschine ist. Vorzugsweise handelt es sich bei der Wiegeeinheit um eine dynamische Waage. Unter einer dynamischen Waage wird eine Waage verstanden, die das Gewicht von Objekten (Wägegut) bestimmt, während sich das (die) Objekt(e) auf einem sogenannten Transportpfad über die Waage bewegt (bewegen), beispielsweise indem es (sie) durch eine Transporteinrichtung wie z.B. ein Lauf- oder Förderband über die Waage, insbesondere über die Wägeschale, geführt wird (werden). Die mindestens eine Wiegeeinheit ist mit einer elektronischen Auswerteeinheit kommunikativ verbunden. Erfindungsgemäß wird ein zu wiegendes Objekt einer der Wiegeeinheiten zugeführt. Die Zufuhr erfolgt vorzugsweise automatisch, beispielsweise durch eine automatische Zuführung. Nachdem das zu wiegende Objekt von der Wiegeeinheit, insbesondere von der Wägeschale, aufgenommen wurde, werden von der Auswerteeinheit in vorgebbaren (kurzen) zeitlichen Abständen elektrische Signale empfangen, die beispielsweise durch Dehnungsmessstreifen der Wägezelle geliefert werden. Gemäß einer Ausführungsform beträgt die Messfrequenz 50 bis 500 Messwerte je Sekunde, in einer bevorzugten Ausführungsform sind 100 bis 300 Messwerte je Sekunde vorgesehen. Als besonders vorteilhaft erweisen sich 200 Messwerte je Sekunde. Aus den elektrischen Signalen werden durch die Auswerteeinheit Gewichtsinformationen bzw. Gewichtswerte berechnet.

Aus einer vorgegebenen Anzahl N der Gewichtsinformationen wird ein abgeleiteter Gewichtswert für das Objekt ermittelt. Der abgeleitete Gewichtswert wird als Mittelwert der N Gewichtsinformationen, vorzugsweise als gleitender Mittelwert von N Gewichtsinformationen, gebildet werden. Außerdem wird für den abgeleiteten Gewichtswert ein Gütewert bestimmt. Das ist die Varianz oder die Standardabweichung für die N Gewichtsinformationen, aus denen der abgeleitete Gewichtswert gebildet wurde.

Erfindungsgemäß wird der Gütewert mit einem Vergleichswert verglichen. Der Vergleichswert kann in Abhängigkeit von der Größe des abgeleiteten Gewichtswertes vorgegeben werden. In Abhängigkeit des Ergebnisses des Vergleichs wird der zugehörige abgeleitete Gewichtswert als ein gültiger oder ungültiger Gewichtswert definiert. Ein abgeleiteter Gewichtswert wird beispielsweise als ein gültiger Gewichtswert definiert, wenn die Standardabweichung oder die Varianz der N Gewichtsinformationen, aus denen der abgeleitete Gewichtswert bestimmt wurde, kleiner oder gleich dem Vergleichswert ist.

Vorzugsweise werden die elektrischen Signale für jede Wiegeeinheit separat erfasst und ausgewertet.

Sobald ein erster gültiger Gewichtswert vorliegt - gleich von welcher Wiegeeinheit -, wird ein neues Objekt der am weitesten stromaufwärts gelegenen Wiegeeinheit zugeführt. Hierzu wird beispielsweise einer automatischen Zuführung signalisiert, dass ein weiteres Objekt der mindestens einen Wiegeeinheit zugeführt werden kann.

In einer bevorzugten Ausführungsform ist vorgesehen, dass die mindestens eine Wiegeeinheit mit Transportmitteln ausgestattet ist, mit denen die Objekte über die Wiegeeinheit bewegt werden. Bei den Transportmitteln kann es sich beispielsweise um Lauf- oder Förderbänder handeln. Während sich ein Objekt über die Wiegeeinheit bewegt, werden fortlaufend, in vorgebbaren zeitlichen Abständen, Gewichtsinformationen bzw. Gewichtswerte bestimmt, aus denen abgeleitete Gewichtswerte und jeweils der Gütewert ermittelt werden. Um die Gewichtsinformationen einem Objekt zuordnen zu können, ist die mindestens eine Wiegeeinheit mit Mitteln kombiniert zum Detektieren zumindest des Eintreffens des Objektes bei der Wiegeeinheit, des (vollständigen) Aufenthalts des Objektes auf der Wiegeeinheit und des Beginns und des Endes des Verlassens der Wiegeeinheit durch das Objekt. Bei den Mitteln zur Detektion kann es sich beispielsweise um Lichtschranken handeln. Vorzugsweise wird zumindest ein Teil der Gewichtsinformationen (und abgeleiteten Gewichtswerte) einem Objekt zugeordnet, die erfasst werden, während sich das Objekt allein auf der Wägeschale der Wiegeeinheit aufhält (aufliegt). Eine andere bevorzugte Ausführung sieht vor, dass zumindest ein Teil der Gewichtsinformationen (und abgeleiteten Gewichtswerte) einem Objekt zugeordnet wird, die erfasst werden, während sich das Objekt vollständig auf der Wägeschale der Wiegeeinheit aufhält (aufliegt). In einer anderen bevorzugten Ausführungsform wird zumindest ein Teil der Gewichtsinformationen (und abgeleiteten Gewichtswerte) einem Objekt zugeordnet, die während eines Zeitraums erfasst werden, der beginnt, nachdem das Objekt vollständig auf der Wägeschale der Wiegeeinheit aufliegt und zusätzlich eine erste vorgebbare Zeitspanne $t_1$ verstrichen ist, und der endet, nachdem das Objekt nicht mehr vollständig auf der Wägeschale der Wiegeeinheit aufliegt und zusätzlich eine zweite vorgebbare Zeitspanne $t_2$ verstrichen ist. Es kann gelten: $t_1 = 0$ und/oder $t_2 = 0$. Vorzugsweise wird das Ereignis, dass das Objekt vollständig auf der Wägeschale der Wiegeeinheit aufliegt, dadurch festgestellt, dass ein am stromaufwärts gelegenen Ende der Wägeschale angeordnetes Mittel zur Detektion des Objektes das Ende der Detektion des Objektes detektiert, eine Lichtschranke beispielsweise (wieder) freigegeben wird; das Ereignis, dass das Objekt nicht mehr vollständig auf der Wägeschale aufliegt, wird vorzugsweise dadurch festgestellt, dass ein am stromabwärts gelegenen Ende der Wägeschale angeordnetes Mittel zur Detektion des Objektes den Beginn der Detektion des Objektes detektiert, eine Lichtschranke beispielsweise bedeckt wird. Durch eine solche Festlegung des Zeitraums, aus dem Gewichtsinformationen (und abgeleiteten Gewichtswerte) einem Objekt zugeordnet werden, werden Ein- und/oder Ausschwingzeiten der Wiegeeinheit berücksichtigt.

Wie erwähnt, wird das nachfolgende Objekt der Wiegeeinheit zugeführt, nachdem der erste gültige Gewichtswert festgestellt wurde. Dennoch werden nach diesem Zeitpunkt weiterhin Gewichtsinformationen für das Objekt ausgewertet und getestet, ob ein gültiger Gewichtswert vorliegt. Diese Erfassung und Auswertung wird während der im voranstehenden Absatz beschriebenen Zeiträumen ausgeführt. Aus zumindest einem Teil der gültigen Gewichtswerte wird das Gewicht des Objektes bestimmt, beispielsweise durch Mittelwertbildung aus allen dem Objekt zugeordneten gültigen Gewichtswerten. In einer bevorzugten Ausführungsform werden direkt aufeinanderfolgende gültige Gewichtswerte zu einer Gruppe zusammengefasst, d.h. zwischen den zeitlich aufeinanderfolgenden gültigen Gewichtswerten wurde kein ungültiger Gewichtswert bestimmt. Gemäß einer bevorzugten Ausführungsform wird das Gewicht des Objektes allein aus der jüngsten Gruppe von dem Objekt zugeordneten gültigen Gewichtswerten bestimmt (da die zuletzt gemessenen Gewichtswerte die genausten sind). In einer weiteren bevorzugten Ausführungsform der Erfindung wird das Gewicht des Objektes aus den k jüngsten gültigen Gruppen von dem Objekt zugeordneten Gewichtswerten bestimmt, bei denen das Gütekriterium der dazwischenliegenden nicht-gültigen Gewichtswerten einen Grenzwert nicht überschreitet. Überschreitet ein nicht-gültiger Gewichtswert einen vorgegebenen Grenzwert, so werden alle vorher bestimmten gültigen Gruppen verworfen.

Erfindungsgemäß werden mindestens zwei Wiegeeinheiten bereitgestellt, wobei die Wägezellen jeder der Wiegeeinheiten in Schwerkraftrichtung derart kaskadiert angeordnet sind, dass das Gesamtgewicht der ersten Wiegeeinheit (und damit auch das Gewicht eines auf der Wägeschale der ersten Wiegeeinheit platzierten Wägegutes) und das Gewicht mindestens einer weiteren Wägeschale der mindestens einen zweiten Wiegeeinheit auf der Wägezelle der mindestens einen zweiten Wiegeeinheit als Vorlast lastet. Das gilt bis zur n-ten Wiegeeinheit, deren Wägeschale im Transportpfad zuletzt angeordnet ist. Die zugehörige Wägezelle ist mit einer Bodenplatte einer vorzugsweise dynamischen Waage verbunden. Für alle Wägezellen kann eine Wägezelle des gleichen Typs eingesetzt werden. Die Wägeschale der ersten Wiegeeinheit ist vor der in Transportrichtung gelegenen Wägeschale der zweiten Wiegeeinheit angeordnet. Vorzugsweise ist ein erster Sensor nahe dem stromaufwärts gelegenen Anfang der Transportvorrichtung der Wägeschale der ersten Wiegeeinheit, ein zweiter Sensor ist nahe dem stromabwärts gelegenen Ende der Transportvorrichtung der Wägeschale der ersten Wiegeeinheit und ein dritter Sensor ist nahe dem stromabwärts gelegenen Ende der Transportvorrichtung der Wägeschale der zweiten Wiegeeinheit angeordnet. Die mindestens zwei Wiegeeinheiten sind mit mindestens einer elektronischen Auswerteeinheit kommunikativ verbunden.

Erfindungsgemäß werden für zumindest zwei Wiegeeinheiten jeweils abgeleitete Gewichtswerte und Gütewerte bestimmt. Vorzugsweise werden die abgeleiteten Gewichtswerte und die Gütewerte für jede Wiegeeinheit separat bestimmt, d.h. jeweils der entsprechenden Wiegeeinheit zugeordnet. Die Auswertung der Gewichtsinformationen erfolgt vorzugsweise parallel oder pseudo-parallel. Nach Feststellung, dass ein erster gültiger Gewichtswert vorliegt, wird einer Zuführung signalisiert, dass ein neues Objekt den mindestens zwei Wiegeeinheiten zugeführt werden kann. Solange Gewichtsinformationen eindeutig einem Objekt zugeordnet werden können, werden diese Gewichtsinformationen weiterhin ausgewertet und ein abgeleiteter Gewichtswert und ein Gütewert gebildet.

Wenn abgeleitete Gewichtswerte und Gütewerte jeweils für die mindestens zwei Wiegeeinheiten separat bestimmt werden, wird gemäß einer bevorzugten Ausführungsform für jede der mindestens zwei Wiegeeinheiten aus zumindest einem Teil der gültigen Gewichtswerte ein vorläufiges Objektgewicht gebildet, beispielsweise indem der Mittelwert aus dem Teil der gültigen Gewichtswerte gebildet wird. In der Folge liegt zumindest für eine Wiegeeinheit ein vorläufiges Objektgewicht vor. Eine bevorzugte Ausführungsform sieht vor, dass aus zumindest einem Teil der vorläufigen Objektgewichte, vorzugsweise aus allen vorläufigen Objektgewichte, ein Objektgewicht bestimmt wird, das für weitere Verarbeitungsschritte, beispielsweise für eine Frankierung durch eine Frankiermaschine, genutzt werden kann. Beispielsweise kann der Mittelwert aus dem Teil der vorläufigen Objektgewichte bzw. aus allen vorläufigen Objektgewichten gebildet werden. Alternativ kann vorgesehen sein, dass das Objektgewicht direkt aus zumindest einem Teil der gültigen Gewichtswerte bestimmt wird, ohne vorherige Bestimmung eines vorläufigen Objektgewichts.

Eine andere bevorzugte Ausführungsform sieht vor, dass zeitlich (direkt) aufeinanderfolgende gültige Gewichtswerte zu einer Gruppe $g_i$ (i = 1, 3, 5, ...) zusammengefasst werden, d.h. zwischen den Gewichtswerten einer Gruppe $g_i$ wurde kein ungültiger Gewichtswert, also ein Gewichtswert mit einem Gütewert oberhalb des Vergleichswertes, festgestellt. Gemäß einer bevorzugten Ausführungsform werden zur Bildung des Objektgewichts oder der vorläufigen Objektgewichte nicht die gültigen Gewichtswerte aus allen Gruppen herangezogen, sondern nur die einer vorgebbaren Anzahl von Gruppen $g_i$ von gültigen Gewichtswerten. Mit anderen Worten, es werden für die Bestimmung des Objektgewichts oder der vorläufigen Objektgewichte nur gültige Gewichtswerte berücksichtigt, die aus Gewichtsinformationen ermittelt wurden, die nach einem vorgebbaren Zeitpunkt erfasst wurden. Gültige Gewichtswerte, die aus Gewichtsinformationen ermittelt wurden, die vor dem vorgebbaren Zeitpunkt erfasst wurden, werden für die Bestimmung des Objektgewichts oder der vorläufigen Objektgewichte nicht genutzt.

Abgeleitete Gewichtswerte, die zwischen zwei aufeinanderfolgenden Gruppen $g_k$ und $g_{k+2}$ (k = 1, 3, 5, ... ) von gültigen Gewichtswerten liegen, werden zu einer Gruppe $g_{k+1}$ von ungültigen bzw. nicht-stabilen Gewichtswerten zusammengefasst. Gemäß einer bevorzugten Ausführungsform wird die Anzahl der bei der Bildung des Objektgewichts oder der vorläufigen Objektgewichte verwendeten Gruppen bestimmt, indem die Gütewerte von Gewichtswerten von aufeinanderfolgenden Gruppen verglichen werden. Vorzugsweise wird aus den Gütewerten einer Gruppe $g_k$ (k = 1, 3, 5, ... ) ein abgeleiteter Gütewert bestimmt, beispielsweise durch Mittelwertbildung, durch Bestimmung des maximalen und/oder minimalen Gütewertes aus der Gruppe $g_k$. Der Vergleich kann darin bestehen, dass geprüft wird, ob die beiden Gütewerte oder abgeleiteten Gütewerte ein vorgegebenes Kriterium erfüllen. In Abhängigkeit des Vergleichs wird die Zahl j bestimmt. In einer bevorzugten Ausführungsform ist hierfür ein Vergleich der abgeleiteten Gütewerte aus zwei aufeinanderfolgenden Gruppen vorgesehen. Als vorteilhaft hat sich erwiesen, wenn der kleinste Gütewert aus einer Gruppe $g_k$ von gültigen Gewichtswerten mit dem größten Gütewert aus einer Gruppe $g_{k-1}$ von nicht-stabilen Gewichtswerten verglichen wird. Gemäß einer bevorzugten Ausführungsform werden Gruppen $g_1$, $g_3$, ... , $g_{k-2}$ von gültigen Gewichtswerten bei der Bildung des Objektgewichts oder der vorläufigen Objektgewichte nicht berücksichtigt, wenn der größte Gütewert aus einer Gruppe $g_{k-1}$ von nicht-stabilen Gewichtswerten um ein vorgebbares Vielfaches größer als der kleinste Gütewert aus einer Gruppe $g_k$ von gültigen Gewichtswerten. Das vorgebbare Vielfache kann beispielsweise zwischen dem Doppelten und dem Zwanzigfachen liegen, vorzugsweise liegt das Vielfache zwischen dem Dreifachen und dem Zehnfachen, besonders bevorzugt zwischen dem Fünffachen und dem Siebenfachen. Alternativ kann vorgesehen sein, dass die abgeleiteten Gütewerte von Gruppen $g_{k+1}$ (k = 1, 3, 5, ... ) nicht-stabiler Gewichtswerte (allein) beurteilt werden. Übersteigt beispielsweise der abgeleitete Gütewert einer Gruppe $g_{k+1}$ (k = 1, 3, 5, ... ) von nicht-stabilen Gewichtswerten eine vorgebbare Grenze, ergibt sich die Zahl j zu k. Vorzugsweise beginnt der Vergleich der Gütewerte der Gruppen mit der jüngsten Gruppe von gültigen Gewichtswerten. Ergibt dieser Vergleich, dass die vorangehende Gruppe von gültigen Gewichtswerten bei der Bildung des Objektgewichts oder der vorläufigen Objektgewichte berücksichtigt wird, so wird diese Gruppe mit der vorangehenden Gruppe aus nicht-stabilen Gewichtswerten vergleichen und so fort, bis ein Vergleich ergibt, dass die vorangehende Gruppe von gültigen Gewichtswerten bei der Bildung des Objektgewichts oder der vorläufigen Objektgewichte nicht berücksichtigt wird. An dieser Stelle bricht das Vergleichsverfahren ab.

Das Verfahren kann sowohl bei Waagen in der beschriebenen vertikalen Bauart als auch bei Waagen mit horizontalem Brieftransport angewendet werden.

Der Algorithmus ist auch bei anderer Anordnung der Wiegezellen einsetzbar (eine Wiegezelle, Hintereinanderschaltung von Wiegezellen).

Die Bildung der Messwertgruppen ist nicht zwingend notwendig; die Gruppenbildung mit anschließender Nichtberücksichtigung von frühen Messwerten führt zu einer weiteren Erhöhung der Robustheit des Verfahrens.

Eine Anordnung nach der Erfindung weist mindestens einen Chip und/oder Prozessor auf und ist derart eingerichtet, dass im Zusammenwirken mit mindestens einer Wiegeeinheit ein Wiegeverfahren ausführbar ist, wobei

- mindestens eine Wiegeeinheit bereitgestellt,
- ein zu wiegendes Objekt auf mindestens einer der Wiegeeinheiten aufgenommen wird,
- Gewichtsinformationen erfasst werden,
- ein abgeleiteter Gewichtswert und ein Gütewert für den abgeleiteten Gewichtswert durch Auswerten einer vorgebbaren Anzahl der Gewichtsinformationen bestimmt wird,
- in Abhängigkeit des Gütewertes festgelegt wird, dass der abgeleitete Gewichtswert ein gültiger Gewichtswert ist, und
- bei Vorliegen eines (ersten) gültigen Gewichtswertes die Wiegeeinheit mit einem neuen Objekt beschickt wird,
- wobei der abgeleitete Gewichtswert als Mittelwert oder gleitender Mittelwert einer vorgebbaren Anzahl N von Gewichtsinformationen und der Gütewert als Varianz oder Standardabweichung der N Gewichtsinformationen, aus denen der abgeleitete Gewichtswert gebildet wurde, bestimmt werden.

Ein erfindungsgemäßes Computerprogramm ermöglicht es einer Datenverarbeitungseinrichtung, nachdem es in den Speicher der Datenverarbeitungseinrichtung geladen worden ist, im Zusammenwirken mit mindestens einer Wiegeeinheit ein Wiegeverfahren durchzuführen, wobei das Wiegeverfahren folgendes umfasst:

- Bereitstellen einer Wiegeeinheit,
- Aufnehmen eines zu wiegenden Objektes auf der Wiegeeinheit,
- Erfassen von Gewichtsinformationen,
- Bestimmen eines abgeleiteten Gewichtswertes und eines Gütewertes für den abgeleiteten Gewichtswert durch Auswerten einer vorgebbaren Anzahl der Gewichtsinformationen,
- in Abhängigkeit des Gütewertes Festlegen, dass der abgeleitete Gewichtswert ein gültiger Gewichtswert ist und
- bei Vorliegen eines (ersten) gültigen Gewichtswertes Beschicken der Wiegeeinheit mit einem neuen Objekt,
- wobei der abgeleitete Gewichtswert als Mittelwert oder gleitender Mittelwert einer vorgebbaren Anzahl N von Gewichtsinformationen und der Gütewert als Varianz oder Standardabweichung der N Gewichtsinformationen, aus denen der abgeleitete Gewichtswert gebildet wurde, bestimmt werden.

In einer weiteren bevorzugten Ausführungsform der Erfindung ist vorgesehen, dass das erfindungsgemäße Computerprogramm modular aufgebaut ist, wobei einzelne Module auf verschiedenen Datenverarbeitungseinrichtungen installiert sind.

Vorteilhafte Ausführungsbeispiele sehen zusätzlich Computerprogramme vor, durch welche weitere in der Beschreibung angegebene Verfahrensschritte oder Verfahrensabläufe ausgeführt werden können.

Solche Computerprogramme können beispielsweise (gegen Gebühr oder unentgeltlich, frei zugänglich oder passwortgeschützt) downloadbar in einem Daten- oder Kommunikationsnetz bereitgestellt werden. Die so bereitgestellten Computerprogramme können dann durch ein Verfahren nutzbar gemacht werden, bei dem ein Computerprogramm aus einem elektronischen Datennetz, wie beispielsweise aus dem Internet, auf eine an das Datennetz angeschlossene Datenverarbeitungseinrichtung heruntergeladen wird.

Um das erfindungsgemäße Verfahren durchzuführen, ist vorgesehen, ein computerlesbares Speichermedium einzusetzen, auf dem Programmcode gespeichert ist, der es einer Datenverarbeitungseinrichtung ermöglicht, nachdem er in den Speicher der Datenverarbeitungseinrichtung geladen worden ist, im Zusammenwirken mit mindestens einer Wiegeeinheit ein Wiegeverfahren durchzuführen, wobei das Wiegeverfahren folgendes umfasst:

- Bereitstellen einer Wiegeeinheit,
- Aufnehmen eines zu wiegenden Objektes auf der Wiegeeinheit,
- Erfassen von Gewichtsinformationen,
- Bestimmen eines abgeleiteten Gewichtswertes und eines Gütewertes für den abgeleiteten Gewichtswert durch Auswerten einer vorgebbaren Anzahl der Gewichtsinformationen,
- in Abhängigkeit des Gütewertes ein Festlegen, dass der abgeleitete Gewichtswert ein gültiger Gewichtswert ist und
- bei Vorliegen eines (ersten) gültigen Gewichtswertes Beschicken der Wiegeeinheit mit einem neuen Objekt,
- wobei der abgeleitete Gewichtswert als Mittelwert oder gleitender Mittelwert einer vorgebbaren Anzahl N von Gewichtsinformationen und der Gütewert als Varianz oder Standardabweichung der N Gewichtsinformationen, aus denen der abgeleitete Gewichtswert gebildet wurde, bestimmt werden.

Durch die Erfindung wird ein neuer Wiegealgorithmus incl. Ablaufsteuerung bereitgestellt, der trotz der deutlichen Erhöhung des Durchsatzes unter Ausnutzung des Prinzips der kaskadierten Wiegezellen eine geforderte Wiegegenauigkeit (beispielsweise mit folgendem Zielwert: bis 250g: +/-1g, ab 250g: +/-0,4%) erreicht. Mit dem Verfahren ist es somit möglich, eine dynamische Waage mit hohem Durchsatz so zu betreiben, dass die Ermittlung von Wiegeergebnissen mit der geforderten Genauigkeit robust erfolgen kann.

Durch die Erfindung werden weiter ein Wiegeverfahren, eine Anordnung, ein Computerprogramm und ein computerlesbares Speichermedium bereitgestellt, die es ermöglichen,

den Durchsatz von dynamischen Waagen, beispielsweise in Frankiermaschinen, zu erhöhen, indem bereits nach Vorliegen eines ersten gültigen Gewichtswertes das nachfolgende zu wiegende Objekt angefordert und der Wiegeeinheit zugeführt wird,

die Genauigkeit der Gewichtsmessung zu erhöhen, indem Gewichtsinformationen von mehreren Wiegeeinheiten ausgewertet oder Gewichtswerte aus Einschwingphasen der Wiegeeinheit verworfen werden, und

den Mess- bzw. Auswertungszeitraum an tatsächlich einem zu wiegenden Objekt zuordenbare Gewichtsinformationen anzupassen, indem beispielsweise noch Gewichtsinformationen zur Gewichtsbestimmung des Objektes genutzt werden, die erfasst werden, wenn sich das Objekt nur noch teilweise auf der Wägeschale der Wiegeeinheit befindet.

Die Erfindung wird nachfolgend unter Bezugnahme auf die Figuren der Zeichnungen an einem Ausführungsbeispiel näher erläutert. Es zeigen:

Figur 1    eine Veranschaulichung einer Frankiermaschine ohne Peripherie,
Figur 2    eine Veranschaulichung einer Frankiermaschine mit automatischer Zuführung,
Figur 3    eine Veranschaulichung einer Frankiermaschine mit automatischer Zuführung und Sealer,
Figur 4    eine Veranschaulichung einer Frankiermaschine mit automatischer Zuführung und dynamischer Waage,
Figur 5    eine Veranschaulichung einer Frankiermaschine mit automatischer Zuführung, Sealer und dynamischer Waage,
Figur 6    eine vereinfachte Darstellung einer einfachen dynamischen Waage,
Figur 7    eine Veranschaulichung von möglichen Einschränkungen im Ablauf der Gewichtsermittlung,
Figur 8    eine Veranschaulichung des prinzipiellen Aufbaus der Wiegefunktionen einer beispielhaften schnellen dynamischen Waage,
Figur 9    eine Veranschaulichung des Prinzips der Gewichtsermittlung mit zwei Wiegezellen,
Figur 10   eine Veranschaulichung von beispielhaften Positionen der Brieflaufsensoren,
Figur 11   eine Veranschaulichung von beispielhaften Brieflauffehlern,

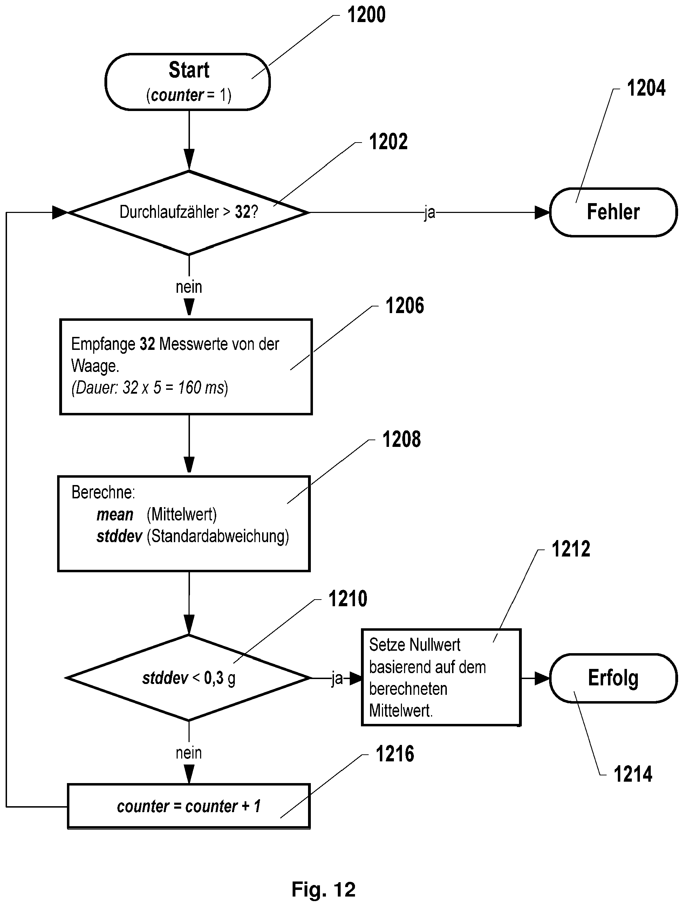

Figur 12   ein Flussdiagramm zur Veranschaulichung eines beispielhaften Tarierens,
Figur 13   eine beispielhafte Visualisierung einer Messwertkurve eines ca. 20g schweren US#10-Briefes,
Figur 14   eine beispielhafte Visualisierung einer Messwertkurve eines ersten C6-Briefs einer Serie (ca. 20g),
Figur 15   eine beispielhafte Visualisierung einer Messwertkurve eines zweiten C6-Briefs einer Serie (ca. 20g),
Figur 16   eine Veranschaulichung von Gruppen gültiger (stabiler) Gewichtswerte beim Durchlauf eines Briefes mit einem Gewicht von 158,2 g.

Die Erfindung soll nachstehend am Beispiel einer Frankiermaschine näher erlätert werden. Allerdings ist die Erfindung nicht auf dieses Ausführungsbeispiel eingeschränkt, sondern ist anwendbar auf eine Vielzahl von Objekten (Wägegut). Insbesondere ist jedes Wägegut, für welches sich ein dem Wägegut zuordenbares Gewicht bestimmen lässt, von der Erfindung mit umfasst. Insbesondere, aber nicht einschränkend, kann es sich bei den Objekten um Poststücke, wie Briefe, Päckchen, Postkarten o.dgl., oder um andere einzeln wiegbare Objekte handeln.

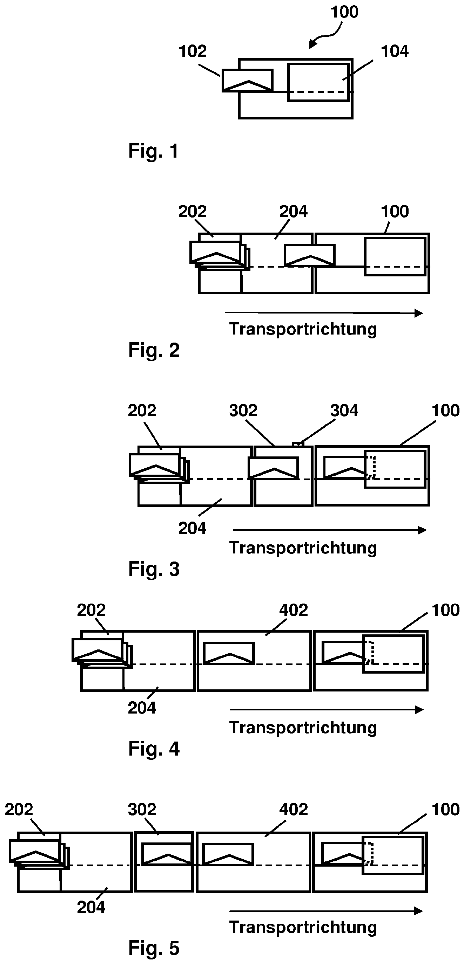

Ein Frankiersystem in der allereinfachsten Form besteht aus einer Frankiermaschine (FM) 100, die Frankierabdrucke auf Briefe, Postkarten oder Frankierstreifen aufdruckt, wobei - mit Ausnahme des Streifen - die Briefe vom Bediener manuell über eine Zuführung 102 zugeführt werden müssen (vgl. Figur 1). Der aufzudruckende Portowert wird hier vom Bediener über eine Benutzerschnittstelle 104 mit Tastatur und Display eingestellt, wobei er von in der Frankiermaschine 100 implementierten Funktionen zur Portoberechnung unterstützt wird. Die Transportgeschwindigkeit der Frankiermaschine 100 ist in der Regel konstant, beispielsweise beträgt sie stets 680 mm/s.

Um die volle Leistungsfähigkeit des Systems, das bis zu 150 Briefe pro Minute verarbeiten kann, nutzen zu können, können an die Frankiermaschine 100 sogenannte Peripheriegeräte angeschlossen werden:

- Automatische Zuführung (AZ) 202
- Anfeuchter/Schließer (engl.: Sealer 302)
- Dynamische Waage (engl.: "dynamic scale" - DS 402)

All diese Geräte verfügen über eigene Hardware (Prozessor, Speicher, Sensoren, Aktoren, Kommunikationsschnittstellen etc.) und werden von einer gerätespezifischen Software gesteuert. Untereinander kommunizieren die Geräte über ein Bussystem, z.B. den sogenannten FSCP-Bus (FSCP: "Franking System Control Protocol"). Konzeptionell handelt es sich dabei durchaus um ein Bussystem, d.h. jedes Gerät kann mit jedem kommunizieren, allerdings kann das System auch so aufgebaut sein, dass jedes Gerät nur mit seinen unmittelbaren Nachbarn kommunizieren kann. Will ein Gerät also mit einem Gerät kommunizieren, das nicht ein unmittelbarer Nachbar ist, müssen entsprechende Nachrichten über unmittelbare Nachbarn weitergeleitet werden.

Automatische Zuführung

Jedes Frankiersystem, dass mit Peripherie verbunden ist, enthält mindestens eine automatische Zuführung 202, die auch immer ganz links den Beginn des Systems bildet (vgl. Figur 2). Die automatische Zuführung 202 umfasst eine Vereinzelungseinheit 204.

Wie bei der Variante ohne Peripherie werden die Parameter für den Frankierabdruck manuell eingestellt. Der Bediener legt dann einen Stapel von Briefen an die automatische Zuführung 202 an, die die Briefe vereinzelt und entsprechend den von der Frankiermaschine 100 vorgegebenen Parametern für Abstände und Lücken einzeln der Frankiermaschine 100 zuführt. Der Durchsatz wird hier von der automatischen Zuführung 202 bestimmt, d.h. wie gut die automatische Zuführung 202 es schafft, die von der Frankiermaschine 100 gewünschten Abstände bei der Vereinzelung einzuhalten.

Anfeuchter/Schließer (Sealer 302)

Der Sealer 302 kann als optionales Peripheriegerät dem System rechts von der automatischen Zuführung 202 hinzugefügt werden (vgl. Figur 3). Der Sealer selbst kann über einen Umschalter 304 von "Seal"- auf "Non-Seal"-Betrieb umgeschaltet werden.

Im Seal-Betrieb befeuchtet der Sealer 302 die Laschen der zugeführten Briefe und drückt die Laschen zu. Im Non-Seal-Betrieb leitet der Sealer 302 die Briefe ohne zu schließen an die Frankiermaschine 100 weiter.

Wie in der Konfiguration ohne Sealer 302 werden die Briefe von der automatischen Zuführung 202 vereinzelt, wobei die Vereinzelungsparameter im Seal-Modus vom Sealer 302 vorgegeben (modifiziert) werden, während im Non-Seal-Mode die Vereinzelungsparameter von der Frankiermaschine 100 festgelegt werden.

Auch in dieser Konfiguration müssen die Parameter für den Frankierabdruck vom Bediener an der Frankiermaschine 100 manuell eingestellt werden.

Dynamische Waage 402

Eine dynamische Waage 402 kann den bislang genannten Kombinationen hinzugefügt werden, wobei sich die dynamische Waage 402 gemäß einer beispielhaften Ausführungsform unmittelbar posteingangsseitig von der Frankiermaschine 100 befindet. Die Figuren 4 und 5 zeigen die beiden möglichen Kombinationen mit einer dynamischen Waage 402. Daneben sind alternative Ausführungsformen möglich, bei denen beispielsweise die automatische Zuführung 202 im Transportpfad zuerst, dann die dynamische Waage 402, der Sealer 302 und zuletzt die Frankiermaschine 100 angeordnet sind.

Ist eine dynamische Waage 402 im System, gibt es zwei Modi: Im Modus "Nur-Transportieren" transportiert die dynamische Waage 402 die Briefe, die ihr vom jeweils links von ihr stehende Gerät zugeführt werden, einfach weiter in die Frankiermaschine 100. Dieser Modus wird gewöhnlich dann gewählt, wenn die zugeführten Briefe im gleichen Gewichts- und Portobereich liegen und somit mit dem gleichen Portowert bedruckt werden können..

Im wichtigeren Modus "dynamische Portoberechnung" werden folgende briefspezifische Parameter vom System während des Transportes ermittelt:

- Dicke und Länge - von der automatischen Zuführung 202
- Höhe und Gewicht - von der dynamischen Waage 402

Bei der Briefübergabe von der dynamischen Waage 402 an die Frankiermaschine 100 werden diese Daten an die Frankiermaschine 100 gesendet, woraufhin diese den Portowert für den jeweiligen Brief berechnet und das Frankierbild entsprechend erzeugt.

In diesem Modus wird der Durchsatz von der dynamischen Waage 402 bestimmt. Kurz gesagt: Erst wenn ein Brief erfolgreich gewogen wurde, fordert die dynamische Waage 402 aktiv die Zuführung des nächsten Briefes vom links von ihr stehenden Gerät an.

Einfache dynamische Waage 402

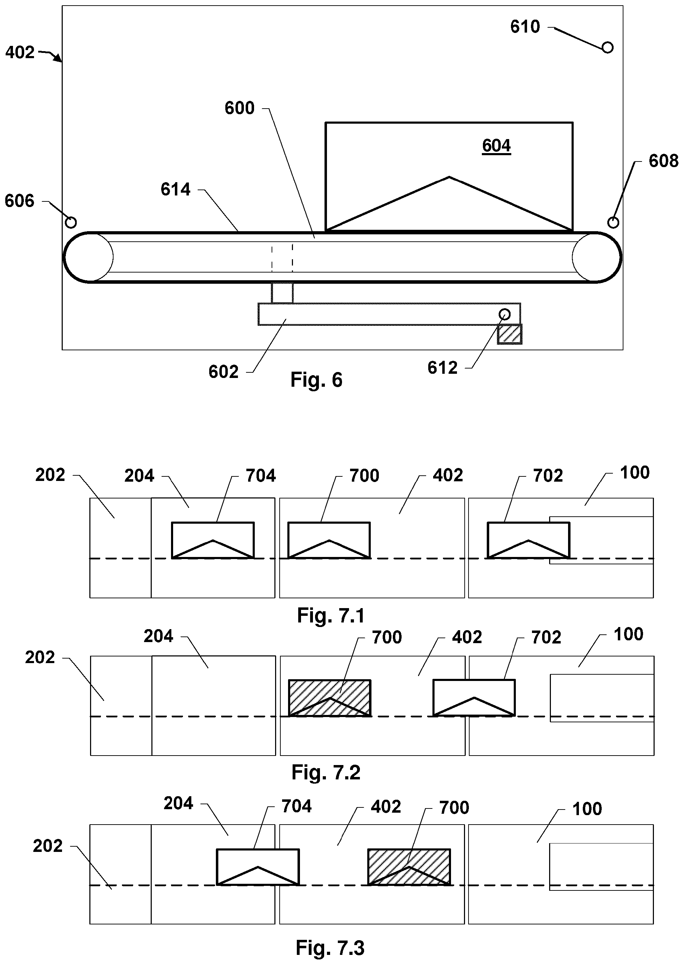

Figur 6 zeigt - extrem vereinfacht - den Aufbau einer einfachen dynamischen Waage 402. Die Transporteinheit 600 einschließlich Transportband 614 Antriebsmotor (in der Skizze weggelassen) liegt komplett auf dem Wiegebalken auf und ist ansonsten weitgehend mechanisch vom Rest des Systems entkoppelt. Wiegebalken mit Dehnungsmessstreifen bilden die Wiegezelle 602. Die Wiegezelle 602 ist mit einer Fixierung 612 an einer Bodenplatte befestigt. Die Waage wird im Leerzustand tariert und misst anschließend das Gewicht aufliegender Briefe 604, während diese transportiert werden. Die beiden Lichtschranken 606, 608 links und rechts der Transporteinheit definieren den Beginn und das Ende der Gewichtsmessung, denn offensichtlich kann mit der Messung erst begonnen werden, wenn der Brief 604 komplett auf der Waage aufliegt, d.h. wenn die Hinterkante des Briefes 604 den Einlaufsensor 606 freigegeben hat. Analog muss die Gewichtsermittlung abgeschlossen sein, wenn der Brief 604 die Transporteinheit verlässt, d.h. wenn die Vorderkante des Briefes 604 den Auslaufsensor 608 bedeckt.

Die Wiegeelektronik besteht in einer beispielhaften Ausführungsform aus einem Wiegebalken mit und einer zugehörigen Elektronik, die die anlogen Widerstandswerte des Dehnungsmessstreifens in digitale Werte wandelt und vorfiltert. Die Steuersoftware der dynamischen Waage 402 ruft 100 Messwerte pro Sekunde von der Wiegezelle 602 ab und verarbeitet diese weiter. (In einer beispielhaften Ausführungsform erfolgt die Kommunikation mit der Wiegezelle 602 über eine RS232-Schnittstelle.) Gelingt es bis zum Erreichen des Auslaufsensors 608 nicht, ein Gewicht zu ermitteln, etwa weil Schwingungen im System zu große Messwertschwankungen erzeugen, wird der Transport angehalten, der Brief 604 zurück auf die Waage gezogen (d.h. der Antrieb ist in der Lage, Briefe 604 in die entgegengesetzte Richtung zu transportieren) und dann bei abgeschaltetem Transport "statisch nachgewogen". Es ist offensichtlich, dass in einem solchen Falle der Durchsatz des Systems sinkt, d.h. alles getan werden muss, solche Situationen zu vermeiden.

Erreicht ein Brief 604 den Auslaufsensor 608 und ein gültiger Gewichtswert ist ermittelt worden, so wird noch der Höhensensor 610 geprüft und daraus die Briefhöhe ermittelt. Zusammen mit den zuvor von der automatischen Zuführung ermittelten Parametern (Länge und Dicke des Briefes 604) wird eine Nachricht mit all diesen Dimensionsdaten an die Frankiermaschine 100 geschickt und vom links stehenden Gerät (automatische Zuführung oder Sealer) der nächste Brief angefordert.

Höhenmessung in der dynamischen Waage 402

Die Höhenmessung ist sehr simpel und benutzt in einer beispielhaften Ausführungsform Reflexlichtschranken (max. 2), deren Licht von einer Folie reflektiert wird, die auf der gegenüberliegenden Plexiglasscheibe (an der Front der dynamischen Waage 402) aufgeklebt ist. Dabei misst die dynamische Waage 402 die Briefhöhe nicht als kontinuierliches Maß, sondern vielmehr im Sinne von postalischen Höhenkategorien, die sich aus den Posttarifen des Landes ergeben, in denen die Waage betrieben wird.

Dazu werden bis zu zwei Reflexlichtschranken als Höhensensor 610 in der (den) für das entsprechende Land vorgegebenen Höhen eingebaut. Die dazu gehörigen Höhenwerte werden in die dynamische Waage 402 eingebracht und dort permanent gespeichert. Erreicht die Vorderkante eines Briefes 604 den Auslaufsensor 608, so wird der Zustand des Höhensensors 610 abgefragt. Ist er bedeckt, wird als Briefhöhe die eingetragene Höhe X+1 mm gesetzt, ist er nicht bedeckt, wird die Höhe X-1 mm gesetzt. (Analog mit zwei Sensoren mit Einbauhöhen X und Y.)

Der oben beschriebene Aufbau des beispielhaften Systems beschränkt den Briefdurchsatz dadurch, dass sich, um einen Brief wiegen zu können, kein weiterer Brief, weder Vorgänger noch Nachfolger, in der dynamischen Waage 402 befinden darf, wie die Figuren 7.1 bis 7.3 veranschaulichen.

In Figur 7.1 ist eine Situation geschildert, in der ein gültiger Messwert für das Gewicht des Briefes 700 erfasst wird.

In der durch Figur 7.2 veranschaulichten Situation kann kein gültiger Messwert für das Gewicht des Briefs 700 ermittelt werden, da der Vorgängerbrief 702 noch auf der Waage liegt.

Figur 7.3 veranschaulicht eine Situation, in der kein gültiger Messwert für das Gewicht des Briefs 700 ermittelt werden kann, weil ein nachfolgender Brief 704 schon auf der Waage aufliegt.

Die einfache dynamische Waage vermeidet die in Figur 7.3 dargestellte Situation, indem sie den nächsten Brief 704 stets erst dann anfordert, wenn der aktuell bearbeitete Brief die Auslauflichtschranke 608 erreicht hat. Damit ergibt sich, dass die Briefe einen Mindestabstand (von Vorderkante zu Vorderkante) haben, der mindestens gleich dem Abstand zwischen Einlauf- 606 und Auslauflichtschranke 608 ist, also ca. 520 mm. Bei einer Transportgeschwindigkeit von 680 mm/s ist damit der theoretische Durchsatz auf 78 Briefe pro Minute beschränkt. In der Praxis erhöht sich der Abstand mindestens um weitere 60 mm, der dadurch entsteht, dass das linke Gerät etwas Zeit braucht, das Kommando, der dynamischen Waage 402 den nächsten Brief zuzuführen, auch auszuführen, und dass der Brief selbst noch eine Wegstrecke s von der automatischen Zuführung 202 bis zur Einlauflichtschranke 606 der dynamischen Waage 402 zurücklegen muss. In der Realität erreicht die einfache dynamische Waage damit einen Durchsatz von ca. 60 Briefen pro Minute.

Dynamische Waage 800

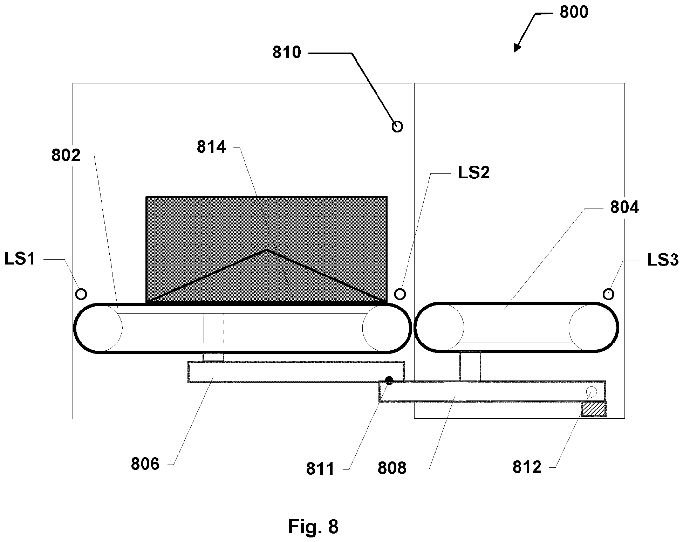

Die erfindungsgemäße "dynamische Waage" 800 hat zwei sequentiell angeordnete Wiegebereiche (mit je einer Wiegeschale und einer Transporteinheit) und ermöglicht es, den Durchsatz, d.h. die pro Zeiteinheit verarbeiteten Briefe, zu erhöhen. Sie ist schneller als die einfache dynamische Waage und wird deshalb in diesem Dokument auch als Fast Dynamic Scale (FDS) bezeichnet. Ein besonderer Vorteil der Erfindung besteht darin, dass es nicht notwendig ist, andere Geräte des Systems, also automatische Zuführung 202, Sealer 302 und Frankiermaschine 100 zu ändern. Figur 8 zeigt - extrem vereinfacht - den Aufbau einer beispielhaften schnellen dynamischen Waage 800 mit zwei Wiegebereichen.

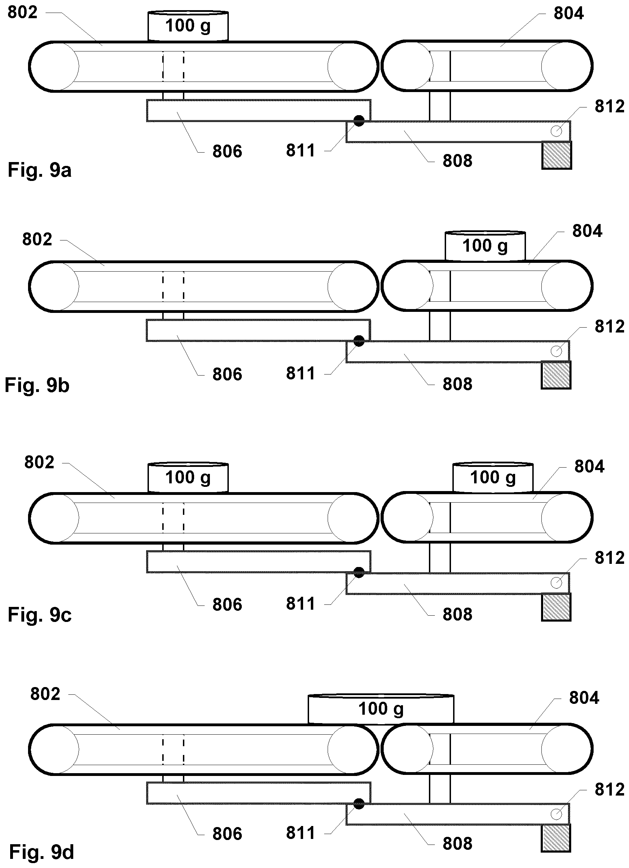

Das Prinzip besteht darin, dass der Transportbereich in zwei unabhängig angetriebene Teile mit Wiegefunktion geteilt wird, wobei der linke Bereich 802 deutlich länger ist als der rechte 804. Auf der linken Wiegezelle 806 liegt nur der linke Transportbereich 802 auf, wohingegen auf der rechten Wiegezelle 808 an einer Verbindungsstelle 811 sowohl der linke Transportbereich 802 einschließlich Wiegezelle 806 und der rechte Transportbereich 804 aufliegen. Die rechte Wiegezelle 808 ist mit einer Fixierung 812 an einer Bodenplatte befestigt. Beide Wiegezellen 806, 808 sind ansonsten vom Rest des Gerätes mechanisch entkoppelt. Figur 9 zeigt, wie dann - nachdem beide Wiegezellen 806, 808 im Stillstand tariert wurden - aufliegende Gewichte gemessen werden:
Auf die erste Wiegezelle 806 wirkt gemäß der Fig.9a ein Brief mit einem Gewicht in Höhe von 100g ein, wobei ein Gewicht in Höhe von 100g durch die erste Wiegezelle 806 gemessen wird. Über die Verbindungsstelle 811 wird das Gewicht, der Mechanik des Transportbereichs 802, der ersten Wiegezelle 806 und das Gewicht des Briefes auch auf die zweite Wiegezelle 808 übertragen, welche so kalibriert und tariert wurde, dass ebenfalls ein Gewicht in Höhe von 100g gemessen wird.

Auf die erste Wiegezelle 806 wirkt gemäß der Fig.9b kein Brief, also ein Gewicht in Höhe von 0g ein. Aber auf die zweite Wiegezelle 808 wirkt gemäß der Fig.9b ein Brief mit einem Gewicht in Höhe von 100g ein. Das Briefgewicht und über die Verbindungsstelle 811 auch das Gewicht der ersten Wiegezelle 806 und der Mechanik des Transportbereichs 802 wirken beide auf die zweite Wiegezelle 808 ein, welche so kalibriert und tariert wurde, dass ein Gewicht in Höhe von 100g gemessen wird.

Auf die erste Wiegezelle 806 wirkt gemäß der Fig.9c ein Brief mit einem Gewicht in Höhe von 100g ein, wobei ein Gewicht in Höhe von 100g durch die erste Wiegezelle 806 gemessen wird. Aber auf die zweite Wiegezelle 808 wirkt gemäß der Fig.9c ebenfalls ein Brief mit einem Gewicht in Höhe von 100g ein. Zusätzlich zu dem Briefgewicht auf der zweiten Wiegezelle 808 wird über die Verbindungsstelle das Gewicht der ersten Wiegezelle 806, der Mechanik des Transportbereichs 802 und das Gewicht des Briefes, das auf die erste Wiegezelle 806 wirkt, auch auf die zweite Wiegezelle 808 übertragen, welche so kalibriert und tariert wurde, dass nunmehr ein Gewicht in Höhe von 200g gemessen wird.

Auf die erste Wiegezelle 806 wirkt gemäß der Fig.9d ein Brief mit einem Gewicht in Höhe von weniger als 100g ein, weil ein Teil des Briefes den linken Transportbereich 802 bereits verlassen hat. Durch die erste Wiegezelle 806 wird somit ein undefinierbarer erster Teil des Briefgewichts gemessen, dieser kann nicht verwendet werden. Aber die zweite Wiegezelle 808 kann das gesamte Briefgewicht ermitteln. Ein erster undefinierter Teil des Briefgewichts, das Gewicht der Mechanik des Transportbereichs 802, das Gewicht der Wiegezelle 806 - wird über die Verbindungsstelle 811 auf die Wiegezelle 808 und ein zweiter undefinierter Teil des Briefgewichts direkt auf die Wiegezelle 808 übertragen. Diese ist so kalibriert und tariert, dass die beiden undefinierten Teile des Briefgewichts zusammen als 100g gemessen werden.

Mit diesem Prinzip wird die Beschränkung des einfachen Systems aufgehoben, die in Figur 7.3 gezeigt ist. Der linke Bereich 802 der schnellen dynamischen Waage 800 ist so lang, dass das Gewicht von Briefen mit Standardgröße (d.h. C6 lang für Europa und US #10 in den USA) und kürzer bereits in diesem Bereich 802 ermittelt werden kann. Briefe die länger als der erste Wiegebereich 802 sind, müssen selbstverständlich unter Nutzung der rechten Wiegezelle 808 gewogen werden. Aufgrund von Effekten, wie z.B. Einschwingphasen der Wiegeeinheit, ist die Länge der Briefe, die auf dem ersten Wiegebereich 802 gewogen werden können, etwas kürzer. Kann das Gewicht für einen Brief bereits auf der linken Wiegezelle 806 ermittelt werden, kann dann auch sofort der nächste Brief angefordert werden. Damit ergibt sich ein theoretischer Briefabstand für Standardbriefformate (Vorderkante zu Vorderkante) der gleich der Länge des linken Bereiches ist, beispielsweise 330 mm. Mit der bereits genannten Verzögerung der Zuführung des Folgebriefes durch den linken Nachbarn (ca. 60 mm) ergibt sich dann ein Gesamtabstand von 390 mm, was bei der Transportgeschwindigkeit von 680 mm/s einen Durchsatz von ca. 104 Briefen pro Minute entspricht. In der Praxis wird dieser Durchsatz aber nur für sehr kurze Formate erreicht.

Es ist vorgesehen, erneut Objekte (wie beispielsweise Poststücke, Briefe) der dynamischen Waage zuzuführen, wenn bestimmte vorbestimmte Bedingungen erfüllt sind und dass nach der Gruppenbildung von Messwerten durch den Mikroprozessor eine Auswertung durchgeführt wird, um zu entscheiden, welcher Messwert als gültig ausgegeben wird.

Brieftransport

Die beiden Transportbereiche 802, 804 werden mit identischen Gleichstrommotoren angetrieben, wobei die Motorleistung per PWM (Pulsweitenmodulation) eingestellt werden kann. Außerdem kann die Drehrichtung der Motoren geändert werden, etwa um einen Brief zum statischen Nachwiegen "zurückzuholen". An beiden Motoren ist eine Encoderscheibe angebracht, deren Takte von einer feldprogrammierbaren Gatter-Anordnung (Field Programmable Gate Array, FPGA) per Interrupts (IRQs) an den Prozessor weitergeleitet werden. Die Auflösung des Encoders (identisch für beide Antriebe) beträgt gemäß einer beispielhaften Ausführungsform ca. 258 μm und ist damit hinreichend genau.

Mit Hilfe der Encoder implementiert die Software (SW) der schnellen dynamischen Waage 800 jeweils eine PID-Regelung (PID = Proportional-Integral-Differential) für die Geschwindigkeit beider Antriebe. Einerseits um bei einem Einbruch der Geschwindigkeit (etwa wenn ein schwerer Brief einläuft) entgegenzuregeln, andererseits, um in gewissen Situationen (s. u.) eine höhere oder niedrigere Systemgeschwindigkeit einzustellen als die Standardgeschwindigkeit von beispielsweise 680 mm/s.

Ferner sind drei Durchlichtschranken LS1, LS2, LS3 vorhanden, die es ermöglichen, Briefe im System zu detektieren (Vorderkanten- bzw. Hinterkanten). Wie Figur 8 zeigt, befindet sich die erste Lichtschranke LS1 unmittelbar am Beginn der linken Transporteinheit 802, die zweite Lichtschranke LS2 am Ende der linken Transporteinheit 802 und die dritte Lichtschranke LS3 am Ende der rechten Transporteinheit 804, also am Ende der schnellen dynamischen Waage 800 insgesamt.

Im Rahmen des Brieftransports werden zwei Aufgaben von der SW übernommen:

•    Brieflaufüberwachung (Fehlererkennung)
•    Ausführung positionsabhängiger Verarbeitungsschritte

Brieflaufüberwachung

Mit Hilfe der Lichtschranken LS1, LS2, LS3 und der Encoder implementiert die Software der schnellen dynamischen Waage 800 eine positionsabhängige Brieflaufüberwachung. Dies erfolgt beispielsweise folgendermaßen: Indem Encodertakte in Wege umgerechnet werden können, die Positionen der Lichtschranken LS1, LS2, LS3 bekannt sind und angenommen werden kann, dass die Briefbewegung mit dem Encodertakt bis auf einen zulässigen mechanischen Schlupf korreliert, werden beispielsweise Briefstaus dadurch detektiert, dass eine Lichtschranke LS1, LS2, LS3 nicht von einem Brief geschlossen bzw. geöffnet wurde, obwohl sich der Brief entsprechend bewegt haben müsste.

Beispiel: Wenn ein Brief vollständig in die schnelle dynamische Waage 800 eingelaufen ist, wird dabei der Sensor LS1 freigegeben. Wird der Brief nun 330 mm weitertransportiert, so müsste er auch den Sensor LS2 freigeben. Mit einem zugelassenen Schlupf von 50% ergibt sich hieraus, dass nach 1,5 * 330 / 0,257989 = 1918 Encodertakten das Ereignis "LS2 öffnet" beobachtet worden ist. Anderenfalls wird ein Briefstau angenommen und das System gestoppt.

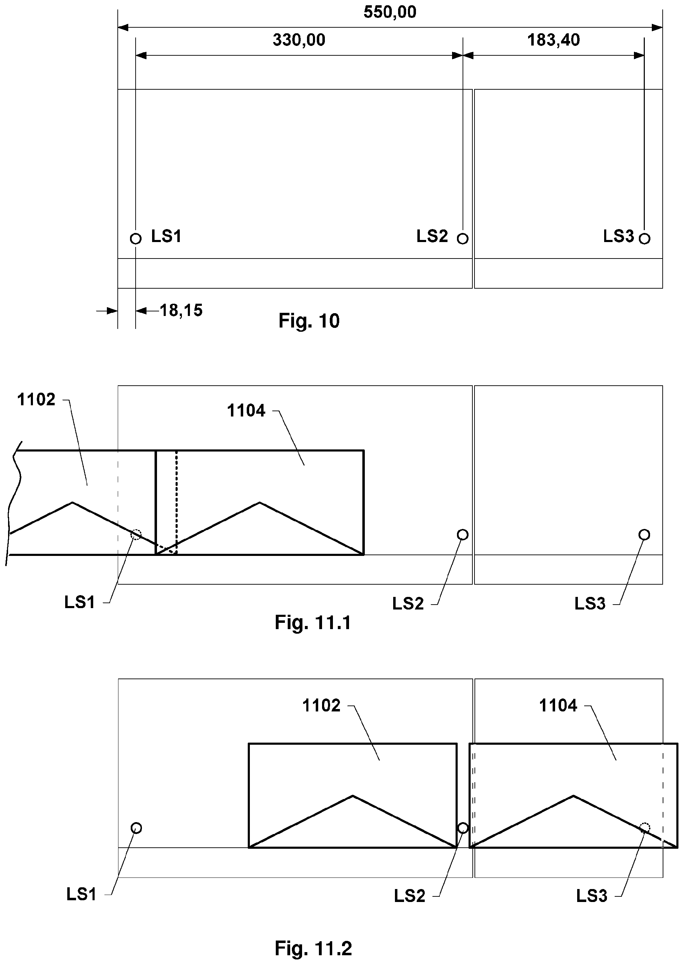

Eine weitere Fehlerursache die von der SW detektiert wird, sind sog. Brieflauffehler, oft verursacht durch Vereinzelungsfehler in der automatischen Zuführung. Figur 11 zeigt ein Beispiel. In der Situation 11.1 laufen zwei nichtvereinzelte Briefe 1102, 1104 in die schnelle dynamische Waage 800 ein. Sie sind an der Lichtschranke LS1 als ein einziger Brief sichtbar. In der schnellen dynamischen Waage 800 trennen sich die Briefe 1102, 1104, und an der Lichtschranke LS2 wird eine Lücke detektiert. Dies führt zu einem Widerspruch, den die SW erkennt und einen Brieflauffehler detektiert.

Sowohl bei Briefstaus als auch bei Brieflauffehlern stoppt das System und sendet eine entsprechende Statusmeldung an die Frankiermaschine 100, die dann mit Hilfe des Bedieners die automatische Briefstaubeseitigung startet.

Briefhandling

Die Brieflaufüberwachung kann auch positionsabhängige Verarbeitungsschritte triggern, etwa: "Wenn sich die Vorderkante eines Briefes 50 mm hinter LS2 befindet und noch kein gültiger Gewichtswert vorliegt, verringere die Geschwindigkeit auf 300 mm/s!". Weitere Beispiele dafür werden nachfolgend benannt.

Gemäß der vorbeschriebenen beispielhaften Ausführungsform ist also vorgesehen, dass Positionsbestimmungen nur auf den Lichtschrankenereignissen und den Encodersignalen basieren und nicht auf Zeitmessungen, die mit Hilfe von Geschwindigkeitsmessungen in Wege umgerechnet werden.

Nachfolgend wird die Gewichtsermittlung in der schnellen dynamischen Waage 800 in größerem Detail erläutert.

Wiegeelektronik

Die beiden Waagen bestehen gemäß einer beispielhaften Ausführungsform jeweils aus einer Wägezelle (Wiegebalken mit Dehnungsmessstreifen) und einer daran angeschlossenen Auswerteelektronik. Elektronisch sind beide Waagen vorzugsweise völlig identisch.

Die SW kommuniziert mit den Auswerteelektroniken per RS232, beide Waagen sind jeweils an einen universellen asynchronen Empfänger/Sender (Universal Asynchronous Receiver Transmitter, UART) des Prozessors angeschlossen. Dabei werden ASCII-basierte Kommandos an die Waage geschickt, die ihrerseits ASCII-Basierte Antworten schickt; mit einer Ausnahme: Im Modus "kontinuierliche Messwerterfassung" senden die Waagen ständig Messwerte im Binärformat, bis dieser Modus verlassen wird.

Die Kommunikation mit den Waagen findet gemäß einer beispielhaften Ausführungsform (pseudo-)parallel statt, indem für jede Waage eine eigene Kommunikationstask gestartet wird, eine übergeordnete Task koordiniert die beiden Tasks.

Konfiguration der Waagen

Die Waagen müssen vor der Benutzung konfiguriert werden, z.B. die Baudrate für die Kommunikation, das Format für (Gewichts-)Messwerte etc. Verschiedene Ausführungsformen sehen vor, diese Konfiguration im EEPROM der Wiegeelektronik abzuspeichern, von wo sie dann bei jedem Reset automatisch übernommen wird. Die beispielhafte schnelle dynamische Waage 800 nutzt diesen Mechanismus nicht, d.h. statt sich auf korrekt gespeicherte Parameter zu verlassen, stellt die SW alle relevanten Parameter beim Start des System neu ein (die Zeit dafür ist vernachlässigbar.)

Einzige Ausnahme: Die Parameter der "characteristic line", werden beim Kalibrieren im EEPROM abgespeichert.

Beispiele für wichtige grundsätzliche Betriebsparameter sind in folgender Tabelle 1 angegeben:

**Tabelle 1**

| Parameter | Wert |
|---|---|
| Baudrate | 38400 bit/s |
| "Internal Conversion Rate" ICR und "High Speed Mode" HSM, für die kontinierliche Messwerterfassung | 200 Messwerte/s |
| "Nominal Value" NOV (Auflösung der Anwenderkennlinie) | Auflösung der Messwerte 1/10 g. |

Ferner bietet die beispielhafte Waage die Möglichkeit eine Kette von digitalen Filtern zu aktivieren. Folgende, in der folgenden Tabelle 2 angegebenen Filtereinstellungen haben sich als vorteilhaft erwiesen:

**Tabelle 2**

| Bezeichnung | Erläuterung |
|---|---|
| "Filtermodus": FMD4 | Schnell einschwingender Digitalfilter (FIR-Tiefpassfilter, Einschwingzeit < 160ms) |
| "Amplifier Signal Filter": ASF6 | Bestimmt die Grenzfrequenz des Filters, hier lt. Manual: 8 Hz. |
| "Kammfilter" (notch filter): NTF | Es werden zwei Frequenzen per Kammfilter gefiltert: 9 Hz und 18 Hz |

Diese Filtereinstellungen werden gemäß einer beispielhaften Ausführungsform für beide Waagen identisch und für alle Messwerterfassungen verwendet, auch während des Tarierens. In einzelnen Fällen hat es sich als vorteilhaft erwiesen, wenn beim Kalibrieren andere Einstellungen verwendet werden.

Tarieren der Waagen (Nullpunktermittlung)

Vor jedem Start der schnellen dynamischen Waage 800 im Modus "Dynamisch Wiegen" werden beide Waagen tariert. Während dieses Vorgangs ist das gesamte System im Stillstand. Erst wenn das Tarieren erfolgreich abgeschlossen ist, meldet die schnelle dynamische Waage 800 ihre Betriebsbereitschaft, woraufhin die Frankiermaschine mit einem weiteren Befehl das System startet.

Beim Tarieren wird eine selbstdefinierte Stillstandsbedingung überwacht und der Nullpunkt neu eingestellt. Auch hier ist das Verfahren für beide Waagen identisch und läuft (pseudo-)parallel ab.

Beim Start 1200 wird ein Zähler auf Eins gesetzt. In einem nächsten Schritt 1202 wird geprüft, ob der Zähler einen vorgegebenen Wert (beispielsweise 32) überschreitet. Falls diese Prüfung positiv ausfällt, wird in einem Schritt 1204 eine Fehlermeldung an die Frankiermaschine geschickt.

Fällt die Prüfung in Schritt 1202 negativ aus, d.h., der Zählerwert ist kleiner oder gleich 32, wird in einem Schritt 1206 eine Messung ausgeführt, bei der Messwerte von der Waage empfangen werden. Eine bevorzugte Ausführungsform sieht vor, 32 Messwerte im Abstand von 5 ms zu empfangen, was zu einer Dauer der Messung von 155 ms führt. Vorzugsweise sind während der Erfassung der Messwerte die Filter aktiv.

In einem anschließenden Schritt 1208 wird der Mittelwert (mean) und die Standardabweichung (stddev) der Messwerte berechnet.

In einem anschließenden Schritt 1210 wird geprüft, ob die Standardabweichung einen vorgegebenen Wert unterschreitet. Ist dies der Fall, wird in einem Schritt 1212 der Nullwert als der berechnete Mittelwert angenommen und in einem Schritt 1214 das erfolgreiche Ende des Tarierens signalisiert.

Fällt die Prüfung in Schritt 1210 negativ aus, wird der Zähler in einem Schritt 1216 um einen Wert erhöht, und das Verfahren geht zu Schritt 1202 zurück.

Datenerfassung

Mit Labormitteln wurde das Verhalten der schnellen dynamischen Waage 800 während des Wiegeprozesses aufgezeichnet und mittels Messwertkurven (Traces) sichtbar gemacht.

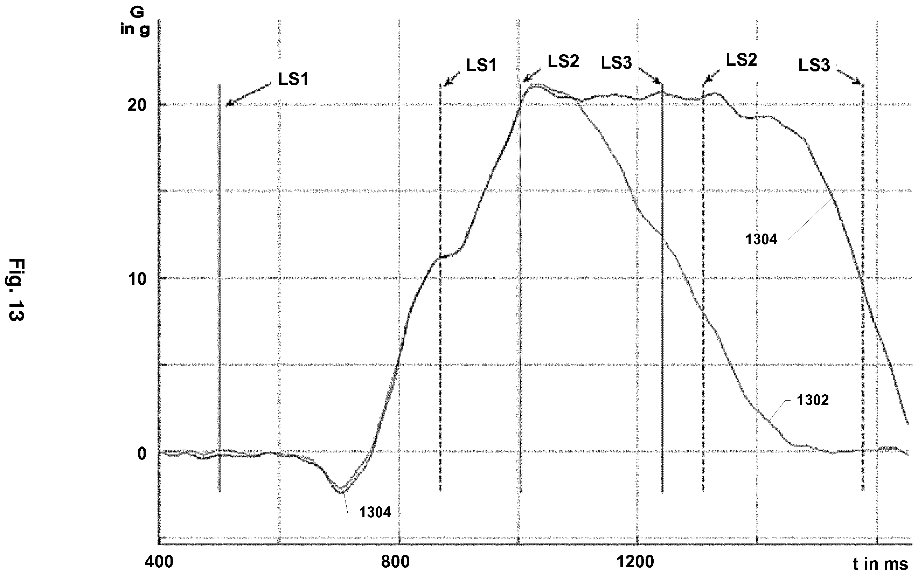

Daher wurde ein entsprechendes Werkzeug entwickelt, das einerseits die Messdaten und Lichtschrankenereignisse visualisiert, darüber hinaus aber auch dazu dient, Ist-Analysen (Stand des Algorithmus) bzw. Was-Wäre-Wenn-Analysen (Einfluss von geänderten Parametern der Wiegealgorithmen) durchzuführen. Figur 13 zeigt als Beispiel die visualisierte Messwertkurve eines ca. 20g schweren US#10-Briefes.

Der Verlauf der Messwerte von der linken Waage ist in einer ersten Messwertkurve 1302 dargestellt, der Verlauf der Messwerte der rechten Waage in einer zweiten Messwertkurve 1304. Die Lichtschrankenereignisse (Close/Open) sind als senkrechte Linien zu erkennen, eine durchgehende Linie steht für "Sensor wird bedeckt" (Close) eine gestrichelte Linie für "Sensor wird freigegeben" (Open).

Algorithmus zur dynamischen Gewichtsermittlung

Stabilitätskriterium

Grundlage des Algorithmus ist die Beobachtung, dass die Messergebnisse von der Waage stabil sind, wenn die Standardabweichung einer Sequenz von N aufeinanderfolgenden Messwerten "gering" ist. Gemäß einer bevorzugten Ausführungsform wird in der schnellen dynamischen Waage 800 die Standardabweichung als Quadratwurzel aus der Varianz definiert, d.h.: $\text{var} := 1/n \sum_{i=1}^{n} (\bar{x} - x_i)^2$ und $\text{stddev} = \sqrt[2]{\text{var}}.$

Für die Fenstergröße N wurde in einer bevorzugten Ausführungsform der Wert 10 gewählt. Die erlaubte Standardabweichung ist hingegen vorzugsweise abhängig vom Mittelwert (mean) der 10 Messwerte und wird beispielsweise nach folgendem Schema berechnet:

1. Berechne test = 0,015 * mean (d.h. 1,5 % vom Betrag des mittleren Gewichts)
2. Ist test < 0,3, dann gilt test := 0,3 (Begrenzung nach unten, wobei z.B. 0,015 * 20g = 0,3g)
3. Ist test > 1,5, dann gilt test := 1,5 (Begrenzung nach oben, wobei z.B. 0,015 * 100g = 1,5g)

Die Schritte 2 und 3 bewirken, dass der Test für leichte Briefe (weniger als 20 g) nicht zu scharf ist, bzw. für schwere Briefe (mehr als 100 g) nicht zu großzügig ist.

Während des Messzeitraums für einen Brief (Zeitraum, in dem die Messwerte von einer Waage den Brief überhaupt sinnvoll zugeordnet werden können - Definition folgt weiter unten), wird also mit jedem eintreffenden Messwert der Mittelwert über die letzten 10 Messwerte und die Standardabweichung der Werte berechnet. Genügt die Standardabweichung dem o.g. Kriterium für die erlaubte Standardabweichung (d.h. stddev <= test), wird der Mittelwert der Reihe als stabiles Messergebnis betrachtet. In einer bevorzugten Ausführungsform ist vorgesehen, dass in der SW-Implementierung nur mit der Varianz gerechnet - das Ziehen der Quadratwurzel (zur Berechnung der Standardabweichung) wird aus Performancegründen weggelassen.

Vorzugsweise erfolgt das Mitteln und Testen für beide Waagen getrennt.

Sobald ein gültiges Messergebnis vorliegt, wird die Zuführung des nächsten Briefes vom linken Nachbarn angefordert. Ausnahmen und weitere Randbedingungen werden in den folgenden Abschnitten erklärt.

Festlegung des Messzeitraumes

Mit den Messzeiträumen sind die Zeiträume gemeint, in denen sich ein Brief so auf einer der Waagen befindet, dass die Waage tatsächlich das vollständige Gewicht des Briefes misst.

Die Prinzipien sind (zumindest in der Theorie) einfach:

- Die Messung wird begonnen, sobald der Brief vollständig und einzeln, d.h. kein weiterer Brief liegt auf der Waage, auf der Waage aufliegt.
- Die Messung wird beendet, sobald der Brief die Waage verlässt (d.h., der Brief liegt nur noch teilweise auf der Waage auf) oder ein weiterer Brief auf die Waage aufläuft.

In der Praxis haben zahlreiche Versuche gezeigt, dass es auf Grund der Einschwingzeiten der Filterkette der Wiegeelektronik notwendig ist, die Zeiträume zu verändern. Mit wenigen Worten: Auch wenn ein Brief vollständig auf die Waage gelaufen ist, muss mit der Auswertung der Messwerte noch eine gewisse Zeit gewartet werden. Umgekehrt können Messwerte noch eine Zeitlang dem Brief zugeordnet werden, selbst wenn er die Waage schon zum Teil verlassen hat. Das Prinzip, die Messung zu beenden, wenn ein weiterer Brief auf die Waage läuft, wird jedoch immer eingehalten. Ferner wird die Messung nicht früher begonnen, als bis ein etwaiger Vorgängerbrief die Waage verlassen hat.

Die Regel "Wenn ein stabiles Messergebnis vorliegt, wird der nächste Brief angefordert." hat eine Ausnahme: Wird ein stabiles Messergebnis schon sehr früh auf der linken Waage 806 gemessen, so wird die Anforderung des nächsten Briefes gegebenenfalls so lange verzögert, dass die Situation, dass der Folgebrief bereits vollständig auf der Waage aufliegt, während der aktuell gemessene diese noch nicht verlassen hat, vermieden wird. Geschieht es dennoch, generiert die schnelle dynamische Waage 800 eine entsprechende Fehlermeldung und beendet die Briefbearbeitung.

Folgende, in nachfolgender Tabelle 3 angegebene Verzögerungszeiten wurden also festgelegt:

**Tabelle 3**

|  | **Beginn** | **Ende** |
|---|---|---|
| Linke Waage | 50 ms nach LS1 open (Brief liegt vollständig auf) | 50 ms nach LS2 close (Brief verlässt die Waage) |
| Rechte Waage | 100 ms nach LS1 open (Brief liegt vollständig auf) bzw. 100 ms nach LS3 open (Vorgängerbrief hat die Waage verlassen) | Unmittelbar mit LS3 close (Brief verlässt die Waage) bzw. Unmittelbar mit LS1 close (Folgebrief läuft ein) |

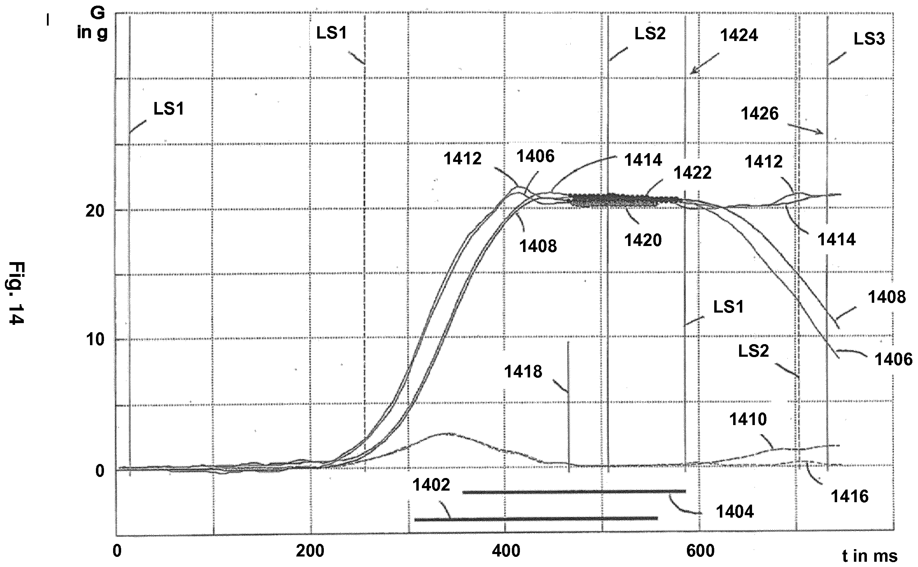

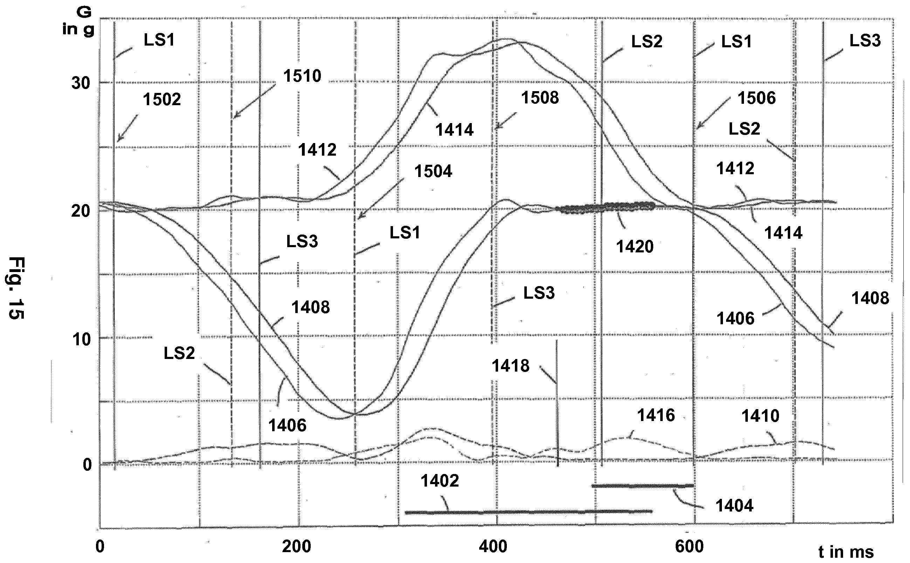

Die in den Figuren 14 und 15 wiedergegebenen Messwertkurven, in denen die Messzeiträume als waagerechte Balken dargestellt sind, sollen das Gesagte illustrieren.

Die nachfolgende Tabelle 4 dient als Legende zu den Figuren 14 und 15:

**Tabelle 4**

| **Waagerechte Balken** | |
|---|---|
| Bezugszeichen 1402 | Zeitraum, in dem Messwerte von der linken Waage 806 bearbeitet werden |
| Bezugszeichen 1404 | Zeitraum, in dem Messwerte von der rechten Waage 808 bearbeitet werden |

(fortgesetzt)

| Kurven | |
|---|---|
| Bezugszeichen 1406 | Messwerte der linken Waage 806 |
| Bezugszeichen 1408 | Mittelwert der letzten 10 Messwerte der linken Waage 806 |
| Bezugszeichen 1410 (im unteren Teil des Diagramms) | Standardabweichung der letzten 10 Werte der linken Waage 806 |
| Bezugszeichen 1412 | Messwerte der rechten Waage 808 |
| Bezugszeichen 1414 | Mittelwert der letzten 10 Messwerte der rechten Waage 808 |
| Bezugszeichen 1416 (im unteren Teil des Diagramms) | Standardabweichung der letzten 10 Werte der rechten Waage 808 |
| **Senkrechte Linien** | |
| LS1 | Einlauflichtschranke 606 (durchgehend: Einlauflichtschranke 606 wird bedeckt, gestrichelt: Einlauflichtschranke 606 wird freigegeben) |
| LS2 | Lichtschranke LS2 am Ende der linken Transporteinheit 802 (durchgehend: Lichtschranke LS2 wird bedeckt, gestrichelt: Lichtschranke LS2 wird freigegeben) |
| LS3 | Auslauflichtschranke 608 (durchgehend: Auslauflichtschranke 608 wird bedeckt, gestrichelt: Auslauflichtschranke 608 wird freigegeben) |
| Bezugszeichen 1418 | Zeitpunkt, an dem der nächste Brief von der automatischen Zuführung 202 angefordert wurde |
| **Kreise** | |
| Bezugszeichen 1420 | Mittelwerte der 10 letzten Messwerte von der linken Waage 806, die gemäß dem oben definierten Stabilitätskriterium stabile Messwerte darstellen |
| Bezugszeichen 1422 | Mittelwerte der 10 letzten Messwerte von der rechten Waage 808, die gemäß dem oben definierten Stabilitätskriterium stabile Messwerte darstellen |

In Figur 14 kann man gut erkennen, dass der Brief zwar bei 256 ms komplett auf der Waage aufliegt, es aber geraume Zeit dauert, bis die Messwerte die erwarteten 20 g erreichen, nämlich erst bei 391 ms. Das entspricht einer "Einschwingzeit" von ca. 140 ms. Bei 466 ms, liegen erstmals 10 Messwerte der linken Waage 806 vor die ein "stabile Messergebnis" im Sinne o.g. Stabilitätskriteriums bilden, aber auch die rechte Waage 808 liefert dann solche Werte. Bei 586 ms läuft der Folgebrief in die schnelle dynamische Waage 800 ein (Ereignis 1424), womit die Messung beendet ist. Die Auswertung der Messwerte von der linken Zelle 806 endet spezifikationsgemäß früher, nämlich nachdem der Brief die linke Waage 806 verlassen hat (LS2 Close bei 507 ms). Bei ca. 732 ms erreicht der Brief die Auslauflichtschranke LS3 (Ereignis 1426).

Figur 15 zeigt die Messwertkurve des Folgebriefes. Gut zu erkennen ist hier die langsame Entlastung der linken Waage 806, obwohl ab 15 ms der Brief einläuft (Ereignis 1502) und bei 257 ms komplett auf der Waage aufliegt (Ereignis 1504). Erst bei 393 ms liefert die linke Waage 806 einen Messwert von 20 g (Ereignis 1508), die Verzögerung liegt wiederum bei ca. 140 ms. Stabile Messergebnisse liefert die linke Waage 806 ab 462 ms bis zum Ende des Messzeitraums (waagerechter Balken 1418). Auf Grund der Tatsache, dass bereits mit dem ersten stabilen Messergebnis der Folgebrief angefordert wird, der bei 599 ms in der schnellen dynamischen Waage 800 eintrifft, gibt es diesmal keine stabilen Messergebnisse von der rechten Waage 808. Zu sehen ist auch, dass der Messzeitraum für die rechte Waage 808 erst bei 496 ms beginnt, d.h. 50 ms nachdem der Vorgängerbrief die Waage vollständig verlassen hat (Ereignis 1510). der Messzeitraum für die rechte Waage 808 endet mit dem Eintreffen des Folgebriefes (599 ms) (Ereignis 1506).

Der Gewichtsberechnungsalgorithmus

Nachdem in den vorangegangenen Abschnitten erläutert wurde, nach welchem Kriterium aus einer Reihe von Messwerten ein stabiles Messergebnis abgeleitet wird und wann überhaupt Messwerte so verarbeitet werden, wird jetzt erklärt, wie der Gewichtswert ermittelt wird, der - zusammen mit den übrigen Dimensionen des Briefes - an die Frankiermaschine übertragen wird.

Der sog. Messzeitraum definiert, wie oben erläutert, den Zeitraum, in dem Messwerte von einer Waage überhaupt bearbeitet werden. Um eine Reihe von Messwerten entsprechend dem o.g. Gütekriterium "gut" (d.h. stabil) zu testen, werden gemäß dieser beispielhaften Ausführungsform mindestens 10 aufeinanderfolgende Messwerte aus diesem Zeitraum gebraucht. Bei einer Messfrequenz von 200 Hz heißt das, dass frühestens 50 ms nachdem Beginn des Messzeitraums ein "stabiles Messergebnis" vorliegen kann.

Wie in der Figur 14 zu erkennen, gibt es häufig mehrere stabile Messergebnisse von einer Waage. In diesem Beispiel sogar von beiden Waagen. Die Berechnung des Gewichtswertes für den Briefes aus diesen Werten erfolgt nun nach folgendem Algorithmus:

1. Bilde den Mittelwert aller stabilen Messergebnisse der linken Waage: $mean_{links}$.
2. Bilde den Mittelwert aller stabilen Messergebnisse der rechten Waage: $mean_{rechts}$.
3. Ergebnis: Mittelwert von $mean_{links}$ und $mean_{rechts}$.

Wenn nur eine der beiden Waagen überhaupt stabile Messwerte geliefert, wird der letzte Schritt weggelassen. In umfangreichen Tests wurde verifiziert, dass dieser Algorithmus die besten Ergebnisse liefert, wenn eine Vielzahl von stabilen Messergebnissen vorliegt.

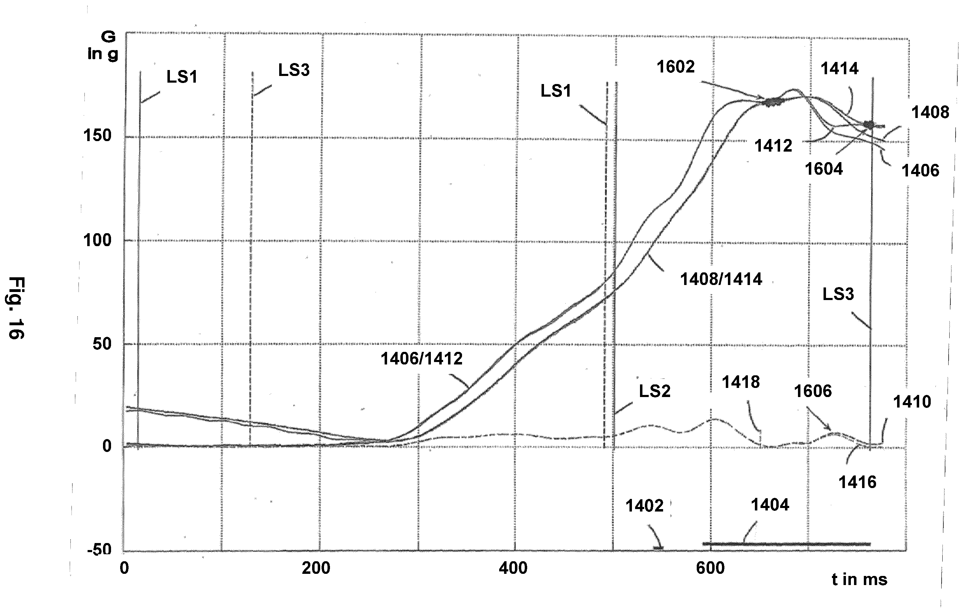

In Figur 16 ist die Messwertkurve beim Durchlauf eines Briefes mit einem Gewicht von 158,2 g wiedergegeben. Es ist zu sehen, dass ab 652 ms die linke Waage stabile Messergebnisse liefert (1602), die Messergebnisse danach aber für geraume Zeit (bis 757 ms) nicht mehr stabil sind, worauf wieder eine Gruppe stabiler Messergebnisse folgt (1604). In der Lücke zwischen den zwei Gruppen steigt die Standardabweichung für 10 aufeinanderfolgende Messwerte von der Waage auf bis zu 6,64 g (Ereignis 1606), während die geringste Standardabweichung in der zweiten Gruppe stabiler Werte nur 0,47 g beträgt. Der Algorithmus in seiner simplen Form (s.o.) liefert hier einen Wert von 165,5 g, was einer Abweichung von 7,4 g vom Sollwert entspricht. Deshalb wird in solchen Fällen etwas anders vorgegangen.

Gibt es mehrere Gruppen stabiler Messergebnisse, d.h. zwischen stabilen Messergebnissen liegt eine Gruppe nicht-stabiler Messergebnisse, also Gruppen $g_1, g_2, ..., g_n$, wobei $g_1$ die erste (älteste) Gruppe von stabilen Messergebnissen ist, gefolgt von $g_2$, einer Gruppe von nicht-stabilen Messergebnissen usw. bis zu einer letzten (jüngsten) Gruppe $g_n$ mit stabilen Messwerten, wird wie folgt verfahren: Die stabilen Messergebnisse über die schließlich der Mittelwert gebildet wird, werden ausgewählt, indem man von $g_n$ (jüngste Gruppe stabiler Messergebnisse) beginnend die Standardabweichung der Vorgängergruppe $g_{n-1}$ (Gruppe nicht-stabiler Messergebnisse) untersucht. Ist für eine Gruppe $g_k$ stabiler Messergebnisse die maximale Standardabweichung in der Gruppe $g_{k-1}$ nicht-stabiler Messergebnisse 5-mal größer als die minimale Standardabweichung in der Gruppe $g_k$ so werden alle vor der Gruppe $g_{k-1}$ liegenden stabilen Messergebnisse nicht mehr zur letztendlichen Mittelwertbildung herangezogen.

In dem Beispiel in Figur 16 heißt das, dass die Messergebnisse der ersten Gruppe nicht mehr zur Mittelwertbildung herangezogen werden, was zu einem Ergebnis von 158,1 g führt. Damit beträgt die Abweichung vom Sollwert nur noch 0,1 g.

Statisches (Nach-)Wiegen

Ist es nicht möglich das Gewicht eines Briefes dynamisch, d.h. während des Transportes, zu bestimmen, wird der Brief statisch nachgewogen. Dass ein Brief nicht dynamisch gewogen werden konnte, wird festgestellt, wenn der Brief LS3 schließt. Liegt dann kein einziges stabiles Messergebnis im Sinne der oben geschilderten Algorithmen vor, wird der Transport gestoppt und der Brief zurück auf die Waage transportiert. Die Antriebe der schnellen dynamischen Waage 800 werden dann ausgeschaltet (die Antriebe der linken Nachbarn sind in einem solchen Fall sowieso nicht aktiv), lediglich die Frankiermaschine läuft weiter.

Nach einer Wartezeit von 100 ms werden von der rechten Waage 808 laufend Messwerte abgerufen und mit dem oben definierten Stabilitätskriterium bewertet. Allerdings ist die Fenstergröße jetzt 50 (Messwerte), statt wie im dynamischen Fall nur 10. Genügt eine Reihe von 50 Messwerten dann dem Stabilitätskriterium, wird der Mittelwert als Gewicht verwendet und die Briefverarbeitung wieder im dynamischen Modus aufgenommen. D.h. ein nächster Brief wird angefordert und der aktuelle Brief an die Frankiermaschine übergeben.

Führt das nicht innerhalb von 5 Sekunden zu Erfolg, wird eine entsprechende Meldung an die Frankiermaschine gesandt.

Ermittlung der Briefhöhe in der dynamischen Waage mit zwei Wiegebereichen

Die Ermittlung der Briefhöhe erfolgt genauso wie in der einfachen dynamischen Waage (s.o.), verändert ist lediglich die x-Position der Höhensensoren 810. Diese befinden sich jetzt am Ende der linken Waage 806, sodass die Abfrage der Sensoren 810 schon erfolgen kann, wenn der Brief LS2 bedeckt.

Die Erfindung beschränkt sich in ihrer Ausführungsform nicht auf die vorstehend angegebenen bevorzugten Ausführungsbeispiele. Vielmehr ist eine Anzahl von Varianten denkbar, die von der erfindungsgemäßen Anordnung, dem erfindungsgemäßen Wiegeverfahren, dem erfindungsgemäßen Computerprogramm und dem erfindungsgemäßen computerlesbaren Speichermedium auch bei grundsätzlich anders gearteten Ausführungen Gebrauch macht.

Zusammenfassung

Die Erfindung betrifft ein Wiegeverfahren, eine Anordnung zur Durchführung des Wiegeverfahrens sowie ein entsprechendes Computerprogramm und ein entsprechendes computerlesbares Speichermedium, welche einsetzbar sind insbesondere im Bereich des dynamischen Wiegens bei der Postverarbeitung. Ein besonderer Einsatzbereich ist die Gewichtsbestimmung von Poststücken mithilfe einer dynamischen Waage.

Hierfür wird ein Wiegeverfahren vorgeschlagen, welches in den Ansprüchen beschrieben ist.

**Patentansprüche**

1. Wiegeverfahren, umfassend folgendes:

   - Bereitstellen einer Wiegeeinheit (402; 800),
   - Aufnehmen eines zu wiegenden Objektes (604) auf der Wiegeeinheit,
   - Erfassen von Gewichtsinformationen,
   - Bestimmen eines abgeleiteten Gewichtswertes und eines Gütewertes für den abgeleiteten Gewichtswert durch Auswerten einer vorgebbaren Anzahl der Gewichtsinformationen,
   - in Abhängigkeit des Gütewertes Festlegen, dass der abgeleitete Gewichtswert ein gültiger Gewichtswert ist, und
   - bei Vorliegen eines gültigen Gewichtswertes Beschicken der Wiegeeinheit (402; 800) mit einem neuen Objekt, wobei der abgeleitete Gewichtswert als Mittelwert oder gleitender Mittelwert einer vorgebbaren Anzahl N von Gewichtsinformationen und der Gütewert als Varianz oder Standardabweichung der N Gewichtsinformationen, aus denen der abgeleitete Gewichtswert gebildet wurde, bestimmt werden,
   - wobei ein System (800) mit mindestens zwei Wiegeeinheiten (802; 804) bereitgestellt wird, wobei die Wiegeeinheiten jeweils zumindest eine Wägezelle (806; 808) und eine Wägeschale umfassen, und wobei die Wägezellen jeder der Wiegeeinheiten in Schwerkraftrichtung derart kaskadiert angeordnet sind, dass das Gesamtgewicht der ersten Wiegeeinheit und das Gewicht mindestens einer weiteren Wägeschale der mindestens einen zweiten Wiegeeinheit auf der Wägezelle der mindestens einen zweiten Wiegeeinheit als Vorlast lastet, die Wägeschale der ersten Wiegeeinheit vor der in Transportrichtung gelegenen Wägeschale der zweiten Wiegeeinheit angeordnet ist und die mindestens zwei Wiegeeinheiten mit mindestens einer elektronischen Auswerteeinheit kommunikativ verbunden sind, und
   - wobei für zumindest zwei Wiegeeinheiten, vorzugsweise für jede der zumindest zwei Wiegeeinheiten unabhängig, abgeleitete Gewichtswerte und Gütewerte bestimmt werden und bei Vorliegen eines gültigen Gewichtswertes das System mit einem neuen Objekt beschickt wird, und
   - wobei aus zumindest einem Teil der gültigen Gewichtswerte ein Objektgewicht abgeleitet wird, indem jeweils aus zumindest einem Teil der gültigen Gewichtswerte, die für eine Wiegeeinheit bestimmt wurden, ein vorläufiges Objektgewicht abgeleitet wird, und aus zumindest einem Teil der vorläufigen Objektgewichte das Objektgewicht abgeleitet wird, vorzugsweise indem ein Mittelwert aus dem zumindest einen Teil der vorläufigen Objektgewichte gebildet wird.

2. Wiegeverfahren nach Anspruch 1, wobei der Gütewert mit einem Vergleichswert verglichen wird, wobei der Vergleichswert vorzugsweise in Abhängigkeit von der Größe des abgeleiteten Gewichtswertes vorgegeben wird, und der abgeleiteter Gewichtswert als ein gültiger Gewichtswert definiert wird, wenn die Standardabweichung oder die Varianz der N Gewichtsinformationen, aus denen der abgeleitete Gewichtswert bestimmt wurde, kleiner oder gleich dem Vergleichswert ist.

3. Wiegeverfahren nach einem der voranstehenden Ansprüche, wobei Gewichtsinformationen dem Objekt zugeordnet und aus zumindest einem Teil der dem Objekt zugeordneten Gewichtsinformationen abgeleitete Gewichtswerte und Gütewerte bestimmt werden, solange das Objekt das einzige zu wiegende Objekt auf der Wiegeeinheit ist.

4. Wiegeverfahren nach einem der voranstehenden Ansprüche, wobei aus zumindest einem Teil der gültigen Gewichtswerte ein Objektgewicht abgeleitet wird.

5. Wiegeverfahren nach einem der voranstehenden Ansprüche, wobei für zumindest einen Teil der Wiegeeinheiten jeweils aufeinanderfolgende gültige Gewichtswerte zu einer Gruppe $g_i$ (i = 1, 3, 5, ... ) zusammengefasst werden und das Objektgewicht oder das vorläufige Objektgewicht aus einer Anzahl Gruppen $g_j$ von gültigen Gewichtswerten abgeleitet wird.

6. Wiegeverfahren nach Anspruch 5, wobei zwischen zwei Gruppen $g_k$ und $g_{k+2}$ (k = 1, 3, 5, ... ) liegende Gewichtswerte zu einer Gruppen $g_{k+1}$ von ungültigen Gewichtswerten zusammengefasst werden und die Zahl j durch Vergleich der zu den Gewichtswerten von aufeinanderfolgenden Gruppen $g_{k+1}$ und $g_{k+2}$ gehörenden Gütewerte bestimmt wird.

7. Wiegeverfahren nach Anspruch 6, wobei, ausgehend von der jüngsten Gruppe $g_m$ von gültigen Gewichtswerten, die Gütewerte von aufeinanderfolgenden Gruppen $g_m$ und $g_{m-1}$, $g_{m-2}$ und $g_{m-3}$, ... verglichen werden, und das Objektgewicht oder das vorläufige Objektgewicht aus den Gruppen $g_m$, $g_{m-2}$, ..., $g_j$ abgeleitet wird, wenn der Vergleich der Gütewerte der Gruppen $g_j$ und $g_{j-1}$ zum ersten Mal ein vorgebbares Kriterium erfüllt.

8. Wiegeverfahren nach einem der Ansprüche 5 bis 7, wobei nach der Zusammenfassung der Gewichtswerte zu Gruppen durch den Mikroprozessor eine Auswertung durchgeführt wird, um zu entscheiden, welcher Messwert als gültig ausgegeben wird.

9. Wiegeverfahren nach einem der voranstehenden Ansprüche, wobei die Wiegeeinheit nach Erfüllung einer oder mehrerer vorgegebenen Bedingungen mit einem neuen Objekt, insbesondere einem Poststück oder Brief, beschickt wird.

10. Anordnung umfassend mindestens eine Wiegeeinheit (402; 800) und mindestens einen Chip und/oder Prozessor, wobei die Anordnung derart eingerichtet ist, dass ein Wiegeverfahren ausführbar ist, welches folgendes umfasst:

   - Erfassen von Gewichtsinformationen eines auf der Wiegeeinheit platzierten Objekts,
   - Bestimmen eines abgeleiteten Gewichtswertes und eines Gütewertes für den abgeleiteten Gewichtswert durch Auswerten einer vorgebbaren Anzahl der Gewichtsinformationen,
   - in Abhängigkeit des Gütewertes Festlegen, dass der abgeleitete Gewichtswert ein gültiger Gewichtswert ist, und
   - bei Vorliegen eines gültigen Gewichtswertes Beschicken der Wiegeeinheit mit einem neuen Objekt,
   - wobei der abgeleitete Gewichtswert als Mittelwert oder gleitender Mittelwert einer vorgebbaren Anzahl N von Gewichtsinformationen und der Gütewert als Varianz oder Standardabweichung der N Gewichtsinformationen, aus denen der abgeleitete Gewichtswert gebildet wurde, bestimmt werden,

   wobei die Anordnung ein System (800) mit mindestens zwei Wiegeeinheiten (802; 804) umfasst, wobei die Wiegeeinheiten jeweils zumindest eine Wägezelle (806; 808) und eine Wägeschale umfassen, und wobei die Wägezellen jeder der Wiegeeinheiten in Schwerkraftrichtung derart kaskadiert angeordnet sind, dass das Gesamtgewicht der ersten Wiegeeinheit und das Gewicht mindestens einer weiteren Wägeschale der mindestens einen zweiten Wiegeeinheit auf der Wägezelle der mindestens einen zweiten Wiegeeinheit als Vorlast lastet, die Wägeschale der ersten Wiegeeinheit vor der in Transportrichtung gelegenen Wägeschale der zweiten Wiegeeinheit angeordnet ist und die mindestens zwei Wiegeeinheiten mit mindestens einer elektronischen Auswerteeinheit kommunikativ verbunden sind, und wobei die Anordnung derart eingerichtet ist, dass das Wiegeverfahren derart ausführbar ist, dass

   - für zumindest zwei Wiegeeinheiten, vorzugsweise für jede der zumindest zwei Wiegeeinheiten unabhängig, abgeleitete Gewichtswerte und Gütewerte bestimmt werden und bei Vorliegen eines gültigen Gewichtswertes das System mit einem neuen Objekt beschickt wird, und
   - wobei aus zumindest einem Teil der gültigen Gewichtswerte ein Objektgewicht abgeleitet wird, indem jeweils aus zumindest einem Teil der gültigen Gewichtswerte, die für eine Wiegeeinheit bestimmt wurden, ein vorläufiges Objektgewicht abgeleitet wird, und aus zumindest einem Teil der vorläufigen Objektgewichte das Objektgewicht abgeleitet wird, vorzugsweise indem ein Mittelwert aus dem zumindest einen Teil der vorläufigen Objektgewichte gebildet wird.

11. Computerprogramm, das es einer Datenverarbeitungseinrichtung ermöglicht, nachdem es in Speichermittel der Datenverarbeitungseinrichtung geladen worden ist, im Zusammenwirken mit einem System, welches mindestens zwei Wiegeeinheiten (802; 804) umfasst, wobei die Wiegeeinheiten jeweils zumindest eine Wägezelle (806; 808) und eine Wägeschale umfassen, und wobei die Wägezellen jeder der Wiegeeinheiten in Schwerkraftrichtung derart kaskadiert angeordnet sind, dass das Gesamtgewicht der ersten Wiegeeinheit und das Gewicht mindestens einer weiteren Wägeschale der mindestens einen zweiten Wiegeeinheit auf der Wägezelle der mindestens einen zweiten Wiegeeinheit als Vorlast lastet, die Wägeschale der ersten Wiegeeinheit vor der in Transportrichtung gelegenen Wägeschale der zweiten Wiegeeinheit angeordnet ist und die mindestens zwei Wiegeeinheiten mit mindestens einer elektronischen Auswerteeinheit kommunikativ verbunden sind, ein Wiegeverfahren nach einem der Ansprüche 1 bis 9 durchzuführen.

12. Computerlesbares Speichermedium, auf dem Programmcode eines Computerprogramms nach Anspruch 11 gespeichert ist.

**Claims**

1. A weighing method, comprising the following:

   - providing a weighing unit (402; 800),
   - picking up an object (604) to be weighed on the weighing unit,
   - acquiring weight information,
   - determining a derived weight value and a quality value for the derived weight value by evaluating a predeterminable quantity of the weight information,
   - depending on the quality value, specifying that the derived weight value is a valid weight value, and
   - if there is a valid weight value, loading the weighing unit (402; 800) with a new object, wherein the derived weight value is determined as an average or moving average of a predeterminable quantity N of weight information, and the quality value is determined as a variance or standard deviation of the N weight information, from which the derived weight value has been produced,
   - wherein a system (800) having at least two weighing units (802; 804) is provided, wherein the weighing units each comprise at least one weighing cell (806; 808) and a weighing pan, and wherein the weighing cells of each of the weighing units are arranged cascaded in the direction of gravity such that the total weight of the first weighing unit and the weight of at least one further weighing pan of the at least one second weighing unit loads the weighing cell of the at least one second weighing unit as a pre-load, the weighing pan of the first weighing unit is arranged in front of the weighing pan of the second weighing unit, which is situated in the transport direction, and the at least two weighing units are communicatively connected to at least one electronic evaluation unit, and
   - wherein derived weight values and quality values are determined for at least two weighing units, preferably independently for each of the at least two weighing units, and if there is a valid weight value, the system is loaded with a new object, and
   - wherein an object weight is derived from at least one part of the valid weight values in that a provisional object weight is derived in each case from at least one part of the valid weight values which have been determined for a weighing unit, and the object weight is derived from at least one part of the provisional object weights, preferably in that an average is produced from the at least one part of the provisional object weights.

2. The weighing method according to claim 1, wherein the quality value is compared with a comparison value, wherein the comparison value is preferably predetermined depending on the size of the derived weight value, and the derived weight value is defined as a valid weight value if the standard deviation or the variance of the N weight information, from which the derived weight value has been determined, is less than or equal to the comparison value.

3. The weighing method according to any one of the preceding claims, wherein weight information is associated with the object and weight values and quality values derived from at least one part of the weight information associated with the object are determined as long as the object is the only object to be weighed on the weighing unit.

4. The weighing method according to any one of the preceding claims, wherein an object weight is derived from at least one part of the valid weight values.

5. The weighing method according to any one of the preceding claims, wherein successive valid weight values are in each case combined into a group $g_i$ (i = 1, 3, 5, ... ) for at least one part of the weighing units, and the object weight or the provisional object weight is derived from a number of groups $g_j$ of valid weight values.

6. The weighing method according to claim 5, wherein weight values lying between two groups $g_k$ and $g_{k+2}$ (k = 1, 3, 5, ... ) are combined into a group $g_{k+1}$ of invalid weight values, and the number j is determined by comparing the quality values belonging to the weight values of successive groups $g_{k+1}$ and gk+2.

7. The weighing method according to claim 6, wherein, starting from the youngest group $g_m$ of valid weight values, the quality values of successive groups $g_m$ and $g_{m-1}$, $g_{m-2}$ and $g_{m-3}$, ... are compared, and the object weight or the provisional object weight is derived from the groups $g_m$, $g_{m-2}$, ..., $g_j$ if the comparison of the quality values of the groups $g_j$ and $g_{j-1}$ fulfils a predefinable criterion for the first time.

8. The weighing method according to any one of claims 5 to 7, wherein, following the combination of the weight values into groups by the microprocessor, an evaluation is realised in order to decide which measuring value is output as valid.

9. The weighing method according to any one of the preceding claims, wherein the weighing unit, after fulfilling one or more predetermined conditions, is loaded with a new object, in particular a mail item or letter.

10. An arrangement comprising at least one weighing unit (402; 800) and at least one chip and/or processor, wherein the arrangement is designed such that a weighing method can be executed which comprises the following:

   - acquiring weight information of an object placed on the weighing unit,
   - determining a derived weight value and a quality value for the derived weight value by evaluating a predeterminable quantity of the weight information,
   - depending on the quality value, specifying that the derived weight value is a valid weight value, and
   - if there is a valid weight value, loading the weighing unit with a new object,
   - wherein the derived weight value is determined as an average or moving average of a predeterminable quantity N of weight information, and the quality value is determined as a variance or standard deviation of the N weight information, from which the derived weight value has been produced,

   wherein the arrangement comprises a system (800) having at least two weighing units (802; 804), wherein the weighing units each comprise at least one weighing cell (806; 808) and a weighing pan, and wherein the weighing cells of each of the weighing units are arranged cascaded in the direction of gravity, the total weight of the first weighing unit and the weight of at least one further weighing pan of the at least one second weighing unit loads the weighing cell of the at least one second weighing unit as a pre-load, the weighing pan of the first weighing unit is arranged in front of the weighing pan of the second weighing unit, which is situated in the transport direction, and the at least two weighing units are communicatively connected to at least one electronic evaluation unit, and wherein the arrangement is designed such that the weighing method can be executed such that

   - derived weight values and quality values are determined for at least two weighing units, preferably independently for each of the at least two weighing units, and if there is a valid weight value, the system is loaded with a new object, and
   - wherein an object weight is derived from at least one part of the valid weight values in that a provisional object weight is derived in each case from at least one part of the valid weight values which have been determined for a weighing unit, and the object weight is derived from at least one part of the provisional object weights, preferably in that an average is produced from the at least one part of the provisional object weights.

11. A computer program which makes it possible for a data processing device, after it has been loaded into storage means of the data processing device and interacting with a system which comprises at least two weighing units (802; 804), wherein the weighing units each comprise at least one weighing cell (806; 808) and a weighing pan, and wherein the weighing cells of each of the weighing units are arranged cascaded in the gravity direction such that the total weight of the first weighing unit and the weight of at least one further weighing pan of the at least one second weighing unit loads the weighing cell of the at least one second weighing unit as a pre-load, the weighing pan of the first weighing unit is arranged in front of the weighing pan of the second weighing unit, which is situated in the transport direction, and the at least two weighing units are communicatively connected to at least one electronic evaluation unit, to realise a weighing method according to any one of claims 1 to 9.

12. A computer-readable storage medium, on which program code of a computer program according to claim 11 is stored.

**Revendications**

1. Procédé de pesage, comprenant les étapes suivantes :

- mise à disposition d'une unité de pesage (402 ; 800),
- réception d'un objet devant être pesé (604) sur l'unité de pesage,
- enregistrement d'informations de pesage,
- détermination d'une valeur de poids dérivée et d'une valeur de qualité pour la valeur de poids dérivée par l'analyse d'un nombre d'informations de poids spécifiable,
- détermination, en fonction de la valeur de qualité, du fait que la valeur de poids dérivée est une valeur de poids valide, et
- en cas de validité de la valeur de poids, chargement de l'unité de pesage (408 ; 800) avec un nouvel objet, la valeur de poids dérivée étant déterminée comme valeur moyenne ou valeur moyenne glissante d'un nombre N spécifiable d'informations de poids et la valeur de qualité étant déterminée comme variance ou écart standard des N informations de poids à partir desquelles la valeur de poids dérivée a été formée,
- un système (800) avec au moins deux unités de pesage (802 ; 804) étant mis à disposition, les unités de pesage comprenant respectivement au moins une cellule de pesée (806 ; 808) et un plateau de pesée, et les cellules de pesage de chacune des unités de pesage étant disposées en cascade dans le sens de la gravitation de telle sorte que le poids total de la première unité de pesage et le poids d'au moins un autre plateau de pesée de l'au moins une deuxième unité de pesage pèse comme précharge sur la cellule de pesée de l'au moins une deuxième unité de pesage, que le plateau de pesée de la première unité de pesage est disposé devant le plateau de pesée, situé dans le sens du transport, de la deuxième unité de pesage et que les au moins deux unités de pesage sont connectées de manière communicative avec au moins une unité d'analyse électronique, et
- pour au moins deux unités de pesage, de préférence pour chacune des au moins deux unités de pesage, des valeurs de poids et des valeurs de qualité dérivées étant déterminées de façon indépendante et le système étant chargé avec un nouvel objet en cas de validité d'une valeur de poids, et
- un poids d'objet étant dérivé à partir d'au moins une partie des valeurs de poids valides, un poids d'objet provisoire étant dérivé respectivement à partir d'au moins une partie des valeurs de poids valides qui ont été déterminées pour une unité de pesage, et le poids d'objet étant dérivé à partir d'une partie des poids d'objet provisoires, de préférence par le fait qu'une valeur moyenne est formée à partir d'au moins une partie des poids d'objet provisoires.

2. Procédé de pesage selon la revendication 1, la valeur de qualité étant comparée à une valeur de comparaison, la valeur de comparaison étant spécifiée de préférence en fonction de la grandeur de la valeur de poids dérivée, et la valeur de poids dérivée étant définie comme une valeur de poids valide, lorsque l'écart standard ou la variance des N informations de poids à partir desquelles la valeur de poids dérivée a été déterminée, est inférieur(e) ou égal(e) à la valeur de comparaison.

3. Procédé de pesage selon l'une quelconque des revendications précédentes, les informations de poids étant attribuées à l'objet et des valeurs de poids et des valeurs de qualité dérivées étant déterminées à partir d'au moins une partie des informations de poids attribuées à l'objet tant que l'objet est le seul objet devant être pesé sur l'unité de pesage.

4. Procédé de pesage selon l'une quelconque des revendications précédentes, un poids d'objet étant dérivé à partir d'au moins une partie des valeurs de poids valides.

5. Procédé de pesage selon l'une quelconque des revendications précédentes, des valeurs de poids valides se succédant respectivement étant rassemblées en un groupe $g_i$ (i = 1, 3, 5, ... ) pour au moins une partie des unités de pesage et le poids d'objet ou le poids d'objet provisoire étant dérivé à partir d'un nombre de groupes $g_i$ de valeurs de poids valides.

6. Procédé de pesage selon la revendication 5, des valeurs de poids se trouvant entre deux groupes $g_k$ et $g_{k+2}$ (k = 1, 3, 5, ... ) étant rassemblées en un groupe $g_{k+1}$ de valeurs de poids non valides, et le nombre j étant déterminé par comparaison des valeurs de qualité appartenant aux valeurs de poids de groupes $g_{k+1}$ et $g_{k+2}$ se succédant.

7. Procédé de pesage selon la revendication 6, les valeurs de qualité de groupes se succédant $g_m$ et $g_{m-1}$, $g_{m-2}$ et $g_{m-3}$, ... étant comparées à partir du groupe le plus récent $g_m$ de valeurs de poids valides, et le poids d'objet ou le poids d'objet provisoire étant dérivé à partir des groupes $g_m$, $g_{m-2}$, ..., $g_j$ lorsque la comparaison des valeurs de qualité des groupes $g_j$ und $g_{j-1}$ remplit pour la première fois un critère spécifiable.

8. Procédé de pesage selon l'une des revendications 5 à 7, une analyse étant effectuée par le microprocesseur après le regroupement des valeurs de poids en groupes, afin de décider quelle valeur de mesure est sortie comme étant valide.

9.  Procédé de pesage selon l'une quelconque des revendications précédentes, l'unité de pesage étant chargée avec un nouvel objet, en particulier un article postal ou une lettre, après avoir remplie une ou plusieurs conditions spécifiées.

10. Dispositif comprenant au moins une unité de pesage (402 ; 800) et au moins une puce et/ou un processeur, le dispositif étant agencé de telle sorte qu'un procédé de pesage est exécutable, lequel procédé comprend les étapes suivantes :

    - enregistrement d'informations de poids d'un objet placé sur l'unité de pesage,
    - détermination d'une valeur de poids dérivée et d'une valeur de qualité pour la valeur de poids dérivée par analyse d'un nombre d'informations de poids spécifiable,
    - détermination, en fonction de la valeur de qualité, du fait que la valeur de poids dérivée est une valeur de poids valide, et
    - en cas de validité d'une valeur de poids, chargement de l'unité de pesage avec un nouvel objet,
    - la valeur de poids dérivée étant déterminée comme valeur moyenne ou valeur moyenne glissante d'un nombre N spécifiable d'informations de poids et la valeur de qualité étant déterminée comme variance ou écart standard des N informations de poids à partir desquelles la valeur de poids dérivée a été formée,

    le dispositif comprenant un système (800) avec au moins deux unités de pesage (802 ; 804), les unités de pesage comprenant respectivement au moins une cellule de pesée (806 ; 808) et un plateau de pesée, et les cellules de pesée de chacune des unités de pesage étant disposées en cascade dans le sens de la gravitation de telle sorte que le poids total de la première unité de pesage et le poids d'au moins un autre plateau de pesée de l'au moins une deuxième unité de pesage pèse comme précharge sur la cellule de pesée de l'au moins une deuxième unité de pesage, que le plateau de pesée de la première unité de pesage est disposé devant le plateau de pesée, situé dans le sens du transport, de la deuxième unité de pesage et que les au moins deux unités de pesage sont connectées de manière communicative avec au moins une unité d'analyse électronique, et le dispositif étant agencé de telle sorte que le procédé de pesage est exécutable de telle sorte que

    - pour au moins deux unités de pesage, de préférence pour chacune des au moins deux unités de pesage, des valeurs de poids et des valeurs de qualité dérivées étant déterminées de façon indépendante et le système étant chargé avec un nouvel objet en cas de validité d'une valeur de poids, et
    - un poids d'objet étant dérivé à partir d'au moins une partie des valeurs de poids valides, un poids d'objet provisoire étant dérivé respectivement à partir d'au moins une partie des valeurs de poids valides qui ont été déterminées pour une unité de pesage, et le poids d'objet étant dérivé à partir d'une partie des poids d'objet provisoires, de préférence par le fait qu'une valeur moyenne est formée à partir d'au moins une partie des poids d'objet provisoires.

11. Programme informatique, lequel permet à une installation de traitement de données, après qu'il a été chargé dans le moyen de stockage de l'installation de traitement de données, d'exécuter un procédé de pesage selon l'une des revendications 1 à 9, en interaction avec un système, lequel comprend au moins deux unités de pesage (802 ; 804), les unités de pesage comprenant respectivement au moins une cellule de pesée (806 ; 808) et un plateau de pesée, et les cellules de pesée de chacune des unités de pesage étant disposées en cascade dans le sens de la gravitation de telle sorte que le poids total de la première unité de pesage et que le poids d'au moins un autre plateau de pesée de l'au moins une deuxième unité de pesage pèse comme précharge sur la cellule de pesée de l'au moins une deuxième unité de pesage, le plateau de pesée de la première unité de pesage étant disposé devant le plateau de pesée de la deuxième unité de pesage situé dans le sens du transport et les au moins deux unités de pesage étant connectées de manière communicative avec au moins une unité d'analyse électronique.

12. Support de stockage lisible par ordinateur, sur lequel le code de programme d'un programme informatique selon la revendication 11 est stocké.

100

102                    104

**Fig. 1**

202        204        100

Transportrichtung

**Fig. 2**

202    302    304    100

204
Transportrichtung

**Fig. 3**

202              402        100

204
Transportrichtung

**Fig. 4**

202    302        402    100

204
Transportrichtung

**Fig. 5**

**Fig. 6**

**Fig. 7.1**

**Fig. 7.2**

**Fig. 7.3**

Fig. 8

802

100 g

804

812

806    811    808

**Fig. 9a**

802

804

100 g

812

806    811    808

**Fig. 9b**

802

100 g

100 g

804

812

806    811    808

**Fig. 9c**

802

100 g

804

812

806    811    808

**Fig. 9d**

**550,00**

**330,00**

**183,40**

LS1    LS2 ○    LS3 ○

**◄—18,15**    **Fig. 10**

**1102**

**1104**

LS1    LS2    LS3

**Fig. 11.1**

**1102**    **1104**

LS1    LS2    LS3

**Fig. 11.2**

**Fig. 12**

**Fig. 13**

**Fig. 14**

Fig. 15

**Fig. 16**

**EP 2 966 424 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1014052 B8
- US 20090008859 A1
- US 20090139777 A1
- DE 102010009431 A1
- DE 102011100176 A1
- GB 2287541 A
- US 4553619 A